# EUROPÄISCHE PATENTSCHRIFT

(11) **EP 4 459 250 B1**
(45) Veröffentlichungstag und Bekanntmachung des Hinweises auf die Patenterteilung: **09.07.2025**
(21) Anmeldenummer: 23171518.6
(22) Anmeldetag: 04.05.2023
(51) Int. Cl.: G01K 1/08

(54) **SYSTEM MIT THERMOMETER UND BEHÄLTER FÜR EIN LADEN DES AKKUS DES THERMOMETERS UND VERWENDUNG**
THERMOMETER AND CONTAINER SYSTEM FOR BATTERY CHARGING OF THERMOMETER AND USE
SYSTÈME THERMOMÉTRIQUE ET CONTENEUR POUR UN MAGASIN DE BATTERIE THERMOMÉTRIQUE ET UTILISATION

(43) Veröffentlichungstag der Anmeldung: 06.11.2024
(73) Patentinhaber: Vorwerk & Co. Interholding GmbH, 42275 Wuppertal (DE)
(72) Erfinder: STEIN, Matthias, 45472 Mühlheim an der Ruhr (DE); BUGGELN, Christoph, 40219 Düsseldorf (DE); SEYDEL, Leon, 42115 Wuppertal (DE); KIELMANN, Philipp, 40878 Ratingen (DE)
(74) Vertreter: Gille Hrabal Partnerschaftsgesellschaft mbB Patentanwälte

(56) Entgegenhaltungen:
- WO-A1-2013/145542
- CN-A- 114 526 826
- CN-U- 207 717 236
- US-A1- 2020 096 393

## Beschreibung

Die Erfindung betrifft ein System mit einem elektrisch betriebenen Thermometer. Die Erfindung betrifft außerdem eine Verwendung für das System.

Das Thermometer kann eine Batterie für seinen Betrieb umfassen. Die Batterie kann wiederaufladbar, also ein Akku bzw. Akkumulator, sein. Das Thermometer kann einen anderen wiederaufladbaren Energiespeicher umfassen. Kann der wiederaufladbare Energiespeicher aufgeladen werden, so wird für das Aufladen eine Ladeeinrichtung benötigt, die das Wiederaufladen ermöglicht.

In der nicht vorveröffentlichten europäischen Patentanmeldung mit dem amtlichen Aktenzeichen 21214995.9 wird ein System mit einem elektrisch betriebenen Thermometer und einer Ladeeinrichtung beschrieben, mit der der Akku des Thermometers aufgeladen werden kann. Es wird außerdem ein Behälter beschrieben, in dem das Thermometer aufbewahrt werden kann. Der Behälter umfasst eine Ladeeinrichtung für das Aufladen des Akkus.

CN 207 717 236 U offenbart eine spezielle Kombinationsvorrichtung für ein wiederaufladbares, sterilisierendes elektronisches Thermometer für die innere Medizin. Mit der vorliegenden Erfindung wird das Ziel verfolgt, ein System mit einem Thermometers weiterzuentwickeln.

Die Aufgabe wird durch ein System mit den Merkmalen des ersten Anspruchs gelöst. Vorteilhafte Ausgestaltungen werden in den abhängigen Ansprüchen beschrieben. Der Nebenanspruch betrifft eine Verwendung für das System.

Das System umfasst ein Thermometer und eine Batterie, insbesondere wiederaufladbare Batterie (Akku), für den Betrieb des Thermometers. Anstelle eines Akkus kann aber auch ein anderer elektrisch wiederaufladbarer Energiespeicher vorgesehen sein. Das System kann einen Behälter für das Thermometer umfassen. Das System kann einen Deckel für das Verschließen des Behälters umfassen. Der Behälter kann eine Ladeeinrichtung für das Laden des wiederaufladbaren Energiespeichers umfassen. Der Deckel kann eine Halteeinrichtung für das Halten des Thermometers umfassen.

Das Thermometer ist ein Messgerät, das verwendet wird, um die Temperatur zu messen.

Das Thermometer kann einen Temperatursensor und eine Skala oder ein Display umfassen, um eine gemessene Temperatur anzuzeigen. Alternativ oder ergänzend können gemessene Temperaturen von dem Thermometer an ein anderes Gerät übermittelt werden. Das andere Gerät kann übermittelte Temperaturen beispielsweise anzeigen und/oder verarbeiten, beispielsweise um den Betrieb eines Geräts in Abhängigkeit von gemessenen Temperaturen zu steuern. Das Übermitteln kann über eine elektrisch leitende Verbindung erfolgen oder drahtlos per Funk, so zum Beispiel per Bluetooth, Thread oder Wlan.

Es können verschiedene Arten von Thermometern vorgesehen sein, darunter:
- Digitales Thermometer: Ein digitales Thermometer kann ein oder mehrere Sensoren wie Thermistoren umfassen und verwenden, um die Temperatur zu messen. Eine gemessene Temperatur kann auf einem digitalen Display angezeigt werden.
- Infrarot-Thermometer: Ein Infrarot-Thermometer verwendet Infrarotstrahlen, um die Oberflächentemperatur von Objekten ohne direkten Kontakt zu messen. Ein Infrarot-Thermometer ist nützlich, um die Temperatur von heißen oder schwer zugänglichen Objekten zu messen.
- Thermoelement: Dieses basiert auf dem Prinzip der Seebeck-Effekts und verwendet zwei verschiedene Metalle, die an einem Ende verbunden sind, um eine Temperaturdifferenz in eine elektrische Spannung umzuwandeln.

Das Thermometer kann ein Gehäuse umfassen, in dem sich u. a. zumindest ein Temperatursensor, eine Elektronik für den Betrieb des Thermometers und eine Batterie befinden können. Im Gehäuse kann eine Funkeinrichtung vorhanden sein. Die Funkeinrichtung kann gemessene Werte versenden und/oder Daten empfangen. Das Gehäuse kann aus Materialien wie Metall, Kunststoff, Keramik und/oder Gummi bestehen.

Die Batterie ist ein elektrochemisches Gerät, das elektrische Energie speichert und sie bei Bedarf in Form von Gleichstrom abgibt. Eine typische Batterie besteht aus einer oder mehreren galvanischen Zellen, die miteinander verbunden sind und gemeinsam elektrische Energie erzeugen.

Es sind verschiedene Arten von Batterien möglich, darunter Alkaline-Batterien, Blei-Säure-Batterien, Lithium-Ionen-Batterien, Nickel-Cadmium-Batterien, Nickel-Metallhydrid-Batterien und viele andere.

Eine wiederaufladbare Batterie, auch bekannt als Akku (Abkürzung für Akkumulator), ist eine Batterie, die nach Entladung wieder aufgeladen werden kann und somit wiederverwendbar ist. Im Gegensatz zu Einwegbatterien, die nach dem Entladen entsorgt werden müssen, können wiederaufladbare Batterien durch Anschließen an eine externe Energiequelle wieder aufgeladen werden, um ihre Energiekapazität wiederherzustellen und sie erneut zu verwenden.

Es gibt verschiedene Arten von wiederaufladbaren Batterien, darunter Nickel-Cadmium (NiCd), Nickel-Metallhydrid (NiMH), Lithium-Ionen (Li-Ion) und Lithium-Polymer (Li-Po).

Der Behälter ist ein Gefäß, um das Thermometer zu halten, zu lagern und/oder zu transportieren. Der Behälter umfasst einen Boden bzw. eine Unterseite und Seitenwände oder eine umlaufende Seitenwand. Der Behälter kann aus Materialien wie Kunststoff, Glas, Metall und/oder Holz hergestellt sein. Der Boden und/oder die ein oder mehreren Seitenwände des Behälters können geschlossen sein, um beispielsweise vor Verunreinigungen besonders gut zu schützen. Der Boden und/oder die ein oder mehreren Seitenwände des Behälters können Öffnungen aufweisen, so zum Beispiel zu Belüftungszwecken.

Der Deckel ist eine Abdeckung oder Verschlussvorrichtung, die dazu dient, die Öffnung des Behälters ganz oder teilweise zu verschließen oder abzudecken. Der Deckel kann beispielsweise auf die Öffnung des Behälters gelegt werden. Der Deckel kann aus Materialien wie Kunststoff, Metall, Glas und/oder Holz hergestellt sein. Der Deckel einschließlich einer Halteeinrichtung sind vorzugsweise durch Spritzguss in einem Stück hergestellt worden. Der Deckel kann eben oder gewölbt sein. Der Deckel kann wie eine Haube geformt sein. Der Deckel kann im Schnitt bogenförmig sein.

Der Deckel kann verwendet werden, um das im Behälter befindliche Thermometer vor äußeren Einflüssen zu schützen, wie zum Beispiel vor Schmutz, Staub, Feuchtigkeit oder Verunreinigungen.

Der Deckel kann ein Druckdeckel sein: Ein Druckdeckel kann dann durch Druck oder Klicken geöffnet und geschlossen werden. Der Druckdeckel kann von dem Behälter vollständig getrennt werden.

Der Deckel kann ein Klappdeckel sein. Der Klappdeckel umfasst eine Klappmechanik. Der Klappdeckel kann geöffnet oder geschlossen werden, indem der Klappdeckel an einer Seite angehoben oder herunterdrückt und so verschwenkt wird. Ein Klappdeckel kann mit dem Behälter dauerhaft und damit unverlierbar verbunden sein.

Die Ladeeinrichtung ist eine Einrichtung, die verwendet wird, um elektrische Energie in den Akku oder in einen anderen wiederaufladbaren Energiespeicher des Thermometers einzuspeisen.

Die Ladeeinrichtung kann eine eigene Stromquelle umfassen und/oder durch ein elektrisches Kabel an eine externe Stromquelle angeschlossen werden. Die Ladeeinrichtung kann als eigene Stromquelle eine Batterie oder einen Akku umfassen. Die Batterie bzw. der Akku können in einem Batteriefach vorhanden sein. Es kann ein Deckel für das Batteriefach vorhanden sein, um die Batterie bzw. den Akku austauschen zu können.

Die Ladeeinrichtung wird für ein Aufladen mit dem wiederaufladbaren Energiespeicher des Thermometers verbunden. Dies kann über elektrische Leiter oder induktiv geschehen. Die Ladeeinrichtung kann eine Steuerungseinheit umfassen, die einen Ladevorgang überwacht und/oder regelt, um sicherzustellen, dass der wiederaufladbare Energiespeicher sicher und effizient aufgeladen wird. Die Ladeeinrichtung kann über Schutzfunktionen wie Überladungsschutz, Kurzschlussschutz, Temperaturüberwachung und/oder automatische Abschaltfunktionen verfügen, um die Sicherheit und Lebensdauer des wiederaufladbaren Energiespeichers zu gewährleisten.

Die Halteeinrichtung des Deckels ist eine Einrichtung, die verwendet wird, um das Thermometer in einer temporären Position am Deckel zu halten und/oder zu sichern.

Die Halteeinrichtung des Deckels ist oder kann zum Beispiel umfassen:
- Klemme, Klammer, Clip, die verwendet werden können, um das Thermometer durch Druck und/oder Reibung und/oder Formschluss am Deckel zu halten. Sie können aus Materialien wie Metall, Kunststoff oder Gummi hergestellt sein.
- Gurt oder Riemen, die verwendet werden können, um das Thermometer zu sichern oder zu fixieren. Gurt oder Riemen werden oft aus Textilien oder anderen flexiblen Materialien hergestellt.
- Ausnehmung, in die das Thermometer hineingelegt werden kann. Die Ausnehmung kann so sein, dass diese ein hineingelegtes Thermometer durch Klemmwirkung halten kann.
- Rastelement, dass das Thermometer durch eine Rastwirkung halten kann.

Das System kann so eingerichtet sein, dass durch das Verschließen des Deckels mit dem Behälter das Thermometer mit der Ladeeinrichtung für ein Aufladen des wiederaufladbaren Energiespeichers verbunden wird, wenn das Thermometer durch den Deckel bzw. durch die Halteeinrichtung des Deckels gehalten wird. Ist der Deckel geschlossen worden, so kann das Thermometer beispielsweise dadurch in die Nähe einer Spule gebracht worden sein. Über die Spule kann das Thermometer dann induktiv aufgeladen werden. Ist der Deckel geschlossen worden, so kann das Thermometer beispielsweise mit elektrischen Kontakten elektrisch verbunden worden sein. Über die elektrischen Kontakte kann das Thermometer dann induktiv aufgeladen werden. Umgekehrt kann durch Öffnen des Deckels ein Aufladen beendet oder unterbrochen werden.

Der Behälter kann eine Befestigungseinrichtung umfassen, mit der das Thermometer und damit auch der Deckel gehalten werden kann, wenn der Deckel geschlossen worden ist. Die Befestigungseinrichtung kann ein Magnet sein oder einen Magneten umfassen, um das Thermometer magnetisch halten zu können. Die Befestigungseinrichtung kann einen Rasthebel umfassen, in den das Thermometer eingerastet werden kann. Die Befestigungseinrichtung kann eine Klammer sein, in die das Thermometer durch Schließen des Deckels hineingedrückt werden kann.

Die Befestigungseinrichtung kann so sein, dass eine hinreichend große Kraft genügt, um den Deckel zu öffnen. Die Kraft kann größer sein als die Summe der Gewichtskräfte von Thermometer und Deckel. Ein Deckel kann sich dann nicht allein aufgrund von Schwerkraft lösen.

Die Befestigungseinrichtung des Behälters und die Halteeinrichtung des Deckels können so eingerichtet sein, dass sich das im Behälter befindliche Thermometer nur von der Befestigungseinrichtung löst, wenn der Deckel geöffnet wird.

Ein erster Ladekontakt der Ladeeinrichtung kann die Befestigungseinrichtung des Behälters sein oder umfassen. Durch Schließen des Deckels kann dann das Thermometer so mit dem Ladekontakt verbunden werden, dass der Deckel nach dem Schließen in seiner geschlossenen Position gehalten werden kann. Durch das Befestigen kann das Thermometer einerseits besonders zuverlässig mit dem elektrischen Kontakt verbunden werden. Durch das Befestigen kann andererseits der Deckel in seiner geschlossenen Position gehalten werden.

Die Befestigungseinrichtung des Behälters kann eine Rasteinrichtung sein oder umfassen, in die das Thermometer einrastet, wenn das Thermometer im Behälter geladen wird. Die Rasteinrichtung kann so sein, dass der Ladekontakt dauerhaft mit Druck an dem Thermometer anliegen kann, um eine besonders zuverlässige elektrische Verbindung zu gewährleisten. Die Rasteinrichtung kann ein Haken oder eine Lasche mit einem von der Lasche abstehenden Vorsprung sein oder einen Haken bzw. eine Lasche mit einem von der Lasche abstehenden Vorsprung umfassen. Durch Schließen des Deckels kann ein Teil des Thermometers einrasten und anschließend durch den Haken bzw. Vorsprung gehalten werden. Die Rasteinrichtung ist grundsätzlich so, dass diese gelöst werden kann, indem der Deckel mit hinreichend großer Kraft geöffnet wird.

Die Befestigungseinrichtung des Behälters kann eine Klammer sein oder umfassen. Die Klammer kann zwei Schenkel umfassen, die elastisch auseinandergebogen werden können. Eine Klammer ist besonders gut geeignet, um eine elektrische Verbindung zum Thermometer für ein Aufladen herstellen zu können. Durch Vorsehen einer Klammer können Fehlertoleranzen besonders leicht ausgeglichen werden, um das Thermometer im geschlossenen Zustand des Deckels so zu halten, dass der Deckel in seiner geschlossenen Position gehalten werden kann. Wird der Deckel in seiner geschlossenen Position gehalten, dann kann sich der Deckel nicht aufgrund seines Eigengewichts zuzüglich des Gewichts des Thermometers durch Schwerkraft in seine geöffnete Stellung bewegen. Es muss also eine hinreichend große Kraft aufgewendet werden, die oberhalb der Gewichtskraft des Deckels und des Thermometers liegen kann.

Damit die Klammer zugleich ein Ladekontakt sein kann, besteht diese vollständig oder zumindest teilweise aus einem elektrisch leitenden, elastisch biegsamen Material. Die Klammer kann ganz oder teilweise aus einem vorzugsweise nichtrostenden Metall bestehen. Die Klammer kann aus einem Blech, so zum Beispiel aus einem Stahlblech, gefertigt worden sein.

Ein zweiter Ladekontakt des Behälters kann eine Feder sein oder umfassen. Durch Schließen des Deckels mit darin befindlichem Thermometer kann die Feder durch das Thermometer beispielsweise vorgespannt werden. Dadurch kann eine elektrische Verbindung zum Thermometer zuverlässig erhalten werden, um aufladen zu können. Die Feder kann aus einem Blech, so zum Beispiel aus einem Stahlblech, gefertigt worden sein.

Die Feder kann an einer Stirnseite des Thermometers anliegen, wenn das Thermometer im Behälter ist und ggfs. geladen wird. Dies kann dazu beitragen, dass das Thermometer innerhalb des Behälters vorteilhaft fixiert gehalten wird.

Das Thermometer kann stiftförmig sein, um beispielsweise in ein Nahrungsmittel zwecks Temperaturmessung hineingestochen werden zu können. Das Thermometer kann eine aus Metall bestehende Hülle umfassen, um Wärme gut zu einem Temperatursensor des Thermometers leiten zu können. Die aus Metall bestehende Hülle kann mit dem wiederaufladbaren Energiespeicher des Thermometers elektrisch leitend verbunden sein, um durch Anschließen der Außenhülle an die Ladeeinrichtung den wiederaufladbaren Energiespeicher aufladen zu können. Die elektrisch leitende Außenhülle kann durch ein Griffteil von einem aus Metall bestehenden Endstück elektrisch getrennt sein. Das Griffteil kann mit dem wiederaufladbaren Energiespeicher elektrisch verbunden sein, um durch Anschließen des Endstücks an die Ladeeinrichtung den wiederaufladbaren Energiespeicher aufladen zu können. Die Hülle und das Endstück können also Ladekontakte für ein Aufladen des wiederaufladbaren Energiespeichers des Thermometers sein, wenn Hülle und Endstück aus einem elektrisch leitfähigen Material bestehen und geeignet mit dem wiederaufladbaren Energiespeicher elektrisch verbunden sind.

Die Halteeinrichtung des Deckels kann einen Einschub umfassen, in den das Thermometer für ein Halten des Thermometers hineingeschoben werden kann. Der Einschub kann durch ein oder mehrere Klammern gebildet sein, die so geformt sein können, dass in diese das Thermometer hineingeschoben werden kann. Der Einschub kann so sein, dass das Thermometer nicht senkrecht zur Einschubrichtung aus dem Einschub herausbewegt werden kann. Dadurch kann vermieden werden, dass sich das Thermometer vom Deckel unplanmäßig lösen kann, wenn der Deckel geöffnet wird. Eine Stirnseite des Einschubs kann offen sein und die gegenüberliegende Stirnseite kann geschlossen sein, um das Thermometer am Deckel geeignet halten zu können. Der Einschub kann kürzer als das Thermometer sein, damit Ladekontakte des Thermometers für ein Aufladen erreichbar bleiben. Der Einschub kann Durchbrüche und/ oder Unterbrechungen aufweisen, damit Ladekontakte des Thermometers für ein Aufladen erreichbar bleiben. Der Einschub kann durch Wände mit Öffnungen gebildet sein. Das Thermometer kann dann durch die Löcher geschoben werden.

Der Einschub kann so ausgerichtet sein, dass das Thermometer parallel zum Deckel in den Einschub hineingeschoben werden kann. Der Durchmesser des Einschubs kann an den Durchmesser des Thermometers so angepasst sein, dass sich das Thermometer zuverlässig von der Befestigungseinrichtung des Behälters löst, wenn der Deckel geöffnet wird.

Das Thermometer kann eine Spitze umfassen. Der Behälter kann eine an die Spitze angepasste Ausnehmung umfassen oder der Einschub kann ein an die Spitze angepasstes, hinreichend geschlossenes Ende aufweisen. Es kann dadurch erreicht werden, dass das Thermometer nur dann im Behälter gelagert werden kann, wenn die Spitze in die angepasste Ausnehmung bzw. in das geschlossene Ende hineinreicht. Dies kann für ein zuverlässiges Aufladen von Vorteil sein.

Der Deckel kann schwenkbar mit dem Behälter verbunden sein. Es kann dann eine Hebelwirkung ausgenutzt werden, damit das Thermometer mit geringem Kraftauswand von der Befestigungseinrichtung, so zum Beispiel von der genannten Klammer, gelöst werden kann. Der Deckel kann langgestreckt und bei einer Stirnseite schwenkbar gelagert sein. Es kann dann besonders gut eine Hebelwirkung ausgenutzt werden, um den Deckel mit besonders geringem Kraftaufwand öffnen zu können.

Der Behälter und/oder das Thermometer können einen Magneten für ein Halten des Behälters bzw. des Thermometers an einer aus ferroelektrischem Material bestehenden Oberfläche umfassen.

Die Länge des Deckels kann der Länge des Thermometers entsprechen, um den Bauraum geringzuhalten.

Der Behälter kann eine ebene Rückseite bzw. Unterseite aufweisen, die dem Deckel vorzugsweise gegenüberliegt. Der Behälter kann dann stabil abgestellt werden. Von der ebenen Seite können Noppen abstehen. Der Behälter kann dann auf den Noppen stabil abgestellt werden. Die Noppen können aus einem elastischen Material wie einem Elastomer bestehen, um den Behälter zuverlässig und rutschfest abstellen zu können.

Das System kann eine vorzugsweise aus einem Elastomer bestehende Thermometerhalterung für ein Halten des Thermometers umfassen, wenn das Thermometer für eine Temperaturmessung eingesetzt wird. Die Thermometerhalterung kann durch den Behälter gehalten und vom Behälter bei Bedarf abgenommen werden.

Der Behälter kann eine Ausnehmung umfassen, in die die Thermometerhalterung eingesetzt werden kann. Vorzugsweise ist die Ausnehmung an einer Stirnseite angeordnet. Die Thermometerhalterung kann in der Ausnehmung kraftschlüssig und/oder formschlüssig gehalten sein. Die Thermometerhalterung kann durch eine Schraub- oder Bajonettverbindung in der Halterung gehalten sein. Die Ausnehmung kann also beispielsweise ein Innengewinde aufweisen und die Thermometerhalterung ein zugehöriges Außengewinde. Die Thermometerhalterung kann durch eine Magnetverbindung in der Ausnehmung gehalten sein.

Ein Teil der Thermometerhalterung kann im eingesetzten Zustand so von der Ausnehmung abstehen, dass das Teil der Thermometerhalterung ergriffen und die Thermometerhalterung aus der Ausnehmung herausgezogen werden kann. Das Teil der Thermometerhalterung kann ein Fuß sein.

Innerhalb der Ausnehmung können ein oder mehrere Elemente wie Steg, Platte und/oder Rippen für ein Halten und/oder Ausrichten der Thermometerhalterung vorhanden sein. Beispielsweise kann ein innerhalb der Ausnehmung vorhandener Steg von einem Schlitz der Thermometerhalterung für ein Halten und/oder Ausrichten umgriffen sein, wenn die Thermometerhalterung in die Ausnehmung eingesetzt ist. Der Steg befindet sich dann innerhalb des Schlitzes. Der Steg kann von einer Seite der Ausnehmung zu einer gegenüberliegenden Seite der Ausnehmung reichen. Der Schlitz kann so geformt sein und den Steg umgreifen, dass die Thermometerhalterung dadurch formschlüssig gehalten werden kann, wenn die Thermometerhalterung in die Ausnehmung eingesetzt ist.

Der Steg kann geradlinig oder bogenförmig verlaufen. Der Verlauf des Schlitzes verläuft entsprechend geradlinig oder bogenförmig. Anstelle des Stegs kann ein anders geformtes Element vorgesehen sein. Die Thermometerhalterung kann dann anstelle des Schlitzes eine Form einer Ausnehmung aufweisen, die an das anders geformte Element angepasst ist, um eine Einsetzausrichtung vorzugeben.

Die Thermometerhalterung kann zumindest eine Thermometerhalteeinrichtung umfassen, durch die das Thermometer in einer Halteposition gehalten werden kann. Die Thermometerhalterung kann zwei verschiedene Thermometerhalteeinrichtungen umfassen, durch die das Speisenthermometer in zwei verschiedenen Haltepositionen gehalten werden kann.

Eine Thermometerhalteeinrichtung der Thermometerhalterung kann wie eine Halteeinrichtung des Deckels beschaffen sein. Eine Thermometerhalteeinrichtung der Thermometerhalterung kann ein Durchgang sein, durch den ein Ende des Thermometers für ein Halten hindurchgesteckt werden kann.

Die Thermometerhalterung kann einen Fuß für ein Aufstellen der Thermometerhalterung auf einem ebenen Untergrund umfassen. Der Fuß kann so sein, dass dieser die Ausnehmung des Behälters verschließt, wenn die Thermometerhalterung in die Ausnehmung eingesetzt ist.

Der Fuß der Thermometerhalterung kann wenigstens eine Thermometerhalteeinrichtung für ein Halten des Speisenthermometers umfassen.

Der Fuß kann seitlich eine geradlinige Kante aufweisen, um den Fuß auf der geradlinigen Kante abstützen zu können. Das Thermometer kann dann durch die Thermometerhalterung gehalten und beispielsweise in ein Nahrungsmittel hineingesteckt sein. Die geradlinige Kante kann an die Unterseite des Behälters angepasst sein, sodass die geradlinige Kante parallel zur Behälterunterseite und/oder angrenzend an die Behälterunterseite verläuft, wenn die Thermometerhalterung in die Ausnehmung eingesetzt ist.

Von dem Fuß kann ein Hals abstehen, der in die Ausnehmung des Behälters hineinreicht, wenn die Thermometerhalterung durch den Behälter gehalten wird.

Der Hals kann einen Schlitz und/oder ein Sackloch umfassen. Schlitz und/oder Sackloch können Thermometerhalteeinrichtungen sein, mit denen das Thermometer in gewünschten Positionen gehalten werden kann.

Diese Offenbarung betrifft außerdem das zuvor beschriebene Thermometer unabhängig vom Behälter. Das Thermometer kann stiftförmig sein. Das Thermometer kann eine aus Metall bestehende Hülle umfassen. Das Thermometer kann ein Griffteil umfassen, das von einem aus Metall bestehenden Endstück elektrisch von der Hülle getrennt ist. Das Thermometer kann einen wiederaufladbaren Energiespeicher wie zum Beispiel einen Akku umfassen. Die Hülle und das Endstück können Ladekontakte für ein Aufladen des wiederaufladbaren Energiespeichers sein.

Diese Offenbarung betrifft außerdem eine Thermometerhalterung unabhängig von dem zuvor beschriebenen Behälter. Die Thermometerhalterung kann wie zuvor beschrieben beschaffen sein. Die Thermometerhalterung kann so an die Ausnehmung im Behälter angepasst sein, dass die Thermometerhalterung in die Ausnehmung des Behälters eingesetzt werden kann.

Das Thermometer ist vorzugsweise ein Speisenthermometer. Ein Speisenthermometer ist ein Temperaturmessgerät, welches dafür bestimmt und geeignet ist, Temperaturen in einem Nahrungsmittel bzw. Lebensmittel während seiner Zubereitung zu messen. Ein Speisenthermometer kann daher Temperaturen messen, die bei der Zubereitung einer Speise auftreten können. Deutlich davon abweichende Temperaturen können nicht gemessen werden. Außerdem ist ein Speisenthermometer den Umgebungsbedingungen gewachsen, die während einer Zubereitung einer Speise auftreten können.

In der Regel werden bei der Zubereitung einer Speise Temperaturen von weniger als 200°C erreicht. Es können aber auch Temperaturen von 350°C erreicht werden, so zum Beispiel für das Backen einer Pizza. Temperaturen von mehr als 350°C werden grundsätzlich nicht überschritten. Ein Speisenthermometer im Sinne der vorliegenden Erfindung ist daher so eingerichtet, dass Temperaturen oberhalb von 400°C, vorzugsweise oberhalb von 300°C, besonders bevorzugt oberhalb von 250°C, nicht mehr gemessen werden können. Grundsätzlich ist das Speisenthermometer so eingerichtet, dass dieses in einem herkömmlichen Backofen eingesetzt werden kann, also bei Temperaturen von bis zu 250°C oder 220°C.

Ein Speisenthermometer im Sinne der vorliegenden Erfindung ist nicht so ausgelegt, dass sehr tiefe Temperaturen damit gemessen werden können wie zum Beispiel Temperaturen deutlich unterhalb von Minustemperaturen, wie diese in haushaltsüblichen Gefriertruhen oder Gefrierschränken erreicht werden. Ein Speisenthermometer im Sinne der vorliegenden Erfindung ist daher nicht so ausgelegt, dass es Temperaturen von weniger als -70°C messen kann. Grundsätzlich ist ein Speisenthermometer im Sinne der vorliegenden Erfindung so ausgelegt, dass es Temperaturen unterhalb von -50°C nicht mehr messen kann, weil Speisen in der Regel unter Zufuhr von Wärme hergestellt werden und sehr tiefe Temperaturen lediglich für ein Einfrieren einer Speise angewendet werden.

Ein Speisenthermometer im Sinne der vorliegenden Erfindung kann einer Dampfatmosphäre widerstehen. Ein Speisenthermometer ist daher grundsätzlich wasserdicht gekapselt. Ein Speisenthermometer im Sinne der vorliegenden Erfindung ist resistent gegenüber üblichen Zutaten einer Speise wie zum Beispiel Säure von Zitronen oder Essig.

Ein Speisenthermometer kann dafür bestimmt und geeignet sein, in eine Speise hineingestochen zu werden, um eine Temperatur im Inneren der Speise messen zu können. Ein Speisenthermometer kann dafür einen langgestreckten Messfühler mit einem spitzen oder zumindest einem sehr dünnen Ende aufweisen, um den Messfühler auch in relativ feste Nahrung wie Fleisch hineinstechen zu können. Der Messfühler umfasst einen Sensor, mit dem eine Temperatur gemessen werden kann. Ein Speisenthermometer kann ein Griffteil aufweisen, das nicht dafür bestimmt ist, in die Speise hineingesteckt zu werden. Das Griffteil kann von einem Benutzer ergriffen werden, um das Speisenthermometer aus einer Nahrung bzw. Speise wieder herausziehen zu können. Das Griffteil kann ebenfalls einen Sensor umfassen, mit dem eine Temperatur gemessen werden kann. Es kann dann auch die Umgebungstemperatur außerhalb einer Nahrung bzw. Speise gemessen werden.

Diese Offenbarung betrifft außerdem einen Behälter für das Aufladen des Thermometers, und zwar unabhängig von dem Thermometer und/oder der Thermometerhalterung. Der Behälter kann, wie zuvor beschrieben, beschaffen und für das Aufladen eines Thermometers eingerichtet sein.

Die Erfindung betrifft außerdem eine Verwendung einer Thermometerhalterung für ein beispielsweise senkrechtes Aufstellen des Behälters mit dem darin befindlichen Thermometer. Die Thermometerhalterung kann mit dem Behälter des Systems verbunden werden. Für das Verbinden kann die Thermometerhalterung beispielsweise in eine stirnseitige Ausnehmung des Behälters eingesetzt werden. Der Behälter kann dann auf der Thermometerhalterung abgestellt werden. Der Behälter kann dann beispielsweise senkrecht auf einer Stirnseite aufgestellt werden. Die Thermometerhalterung kann das Aufstellen verbessern, um beispielsweise Geräusche zu dämmen und/oder die Rutschfestigkeit zu verbessern. Die Thermometerhalterung kann aus einem Material bestehen, die das zu leisten vermag. Das Material der Thermometerhalterung kann daher nachgiebiger und/oder rutschfester als das Material des Behälters sein.

Die für die Verwendung vorgesehene Thermometerhalterung kann, wie zuvor beschrieben, beschaffen sein. Die für die Verwendung vorgesehene Thermometerhalterung kann insbesondere zumindest eine Thermometerhalteeinrichtung für ein Halten des Thermometers oder zwei verschiedene Thermometerhalteeinrichtungen umfassen, durch die das Thermometer in zwei verschiedenen Haltepositionen gehalten werden kann. Die Thermometerhalterung kann einen Fuß und einen vom Fuß abstehenden Hals umfassen. Im Hals kann ein Schlitz vorhanden sein. Der Fuß kann eine seitliche Kante umfassen. Der Schlitz kann mit dieser Kante einen rechten Winkel einschließen.

Es zeigen
- Figur 1:: Schnitt durch ein System mit einem Speisenthermometer und einer Thermometerhalterung;
- Figur 2:: gegenüber der Figur 1 um 90° verdrehte Ansicht des Systems;
- Figur 3:: System mit in eine Speise von oben eingestecktem Thermometer;
- Figur 4:: gegenüber der Figur 1 um ca. 70° verdrehte Ansicht des Systems;
- Figur 5:: System mit in eine Speise seitlich eingestecktem Thermometer;
- Figur 6:: Aufsicht auf Thermometerhalterung;
- Figur 7:: Aufsicht auf Thermometerhalterung mit Thermometer und Befestigung an Gefäßwand;
- Figur 8:: dreidimensionale Darstellung einer zweiten Ausführungsform;
- Figur 9:: schematische seitliche Ansicht auf eine dritte Ausführungsform;
- Figur 10:: Halterung aus Figur 9 mit stehendem Thermometer;
- Figur 11:: System mit als Griff dienender Thermometerhalterung;
- Figur 12:: System mit an Gefäßwand befestigter Thermometerhalterung;
- Figur 13:: System mit in eine Speise seitlich eingestecktem Thermometer;
- Figur 14:: Aufsicht auf Thermometerhalterung aus Figur 13;
- Figur 15:: System mit in eine Speise seitlich eingestecktem Thermometer;
- Figur 16:: System mit zylinderförmigem Behälter;
- Figur 17:: Unterseite einer Thermometerhalterung;
- Figur 18:: Aufsicht auf Thermometerhalterung;
- Figur 19:: Behälter für ein Aufladen;
- Figur 20:: Stirnseitenansicht des Behälters;
- Figur 21:: Stirnseitenansicht des Behälters mit eingesetzter Thermometerhalterung;
- Figur 22:: Aufsicht auf Behälter;
- Figur 23:: Schnitt durch Behälter;
- Figur 24:: Schnitt durch Behälter;
- Figur 25:: Schnitt durch weiteren Behälter;
- Figur 26:: Schnitt durch weiteren Behälter;
- Figur 27:: Schnitt durch weiteren Behälter;
- Figur 28:: Aufsicht auf einen weiteren Behälter;
- Figur 29:: Ansicht von Wänden für ein Halten eines Thermometers am Deckel;
- Figur 30:: senkrechtes Aufstellen eines Systems mit Behälter.

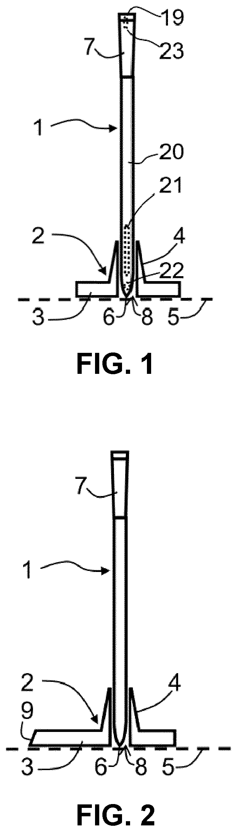

Die Figur 1 zeigt einen Schnitt durch ein Thermometer, das ein Speisenthermometer 1 sein kann. Es wird weiter eine Thermometerhalterung 2 für ein Halten des Thermometers 1 gezeigt. Die beispielsweise aus einem Elastomer bestehende Thermometerhalterung 2 kann einen Fuß 3 und einen Hals 4 umfassen. Steht der Fuß 3 auf einem waagerechten, ebenen Untergrund 5, dann steht der Hals 4 nach oben von dem Fuß 3 ab. Der Hals 4 kann sich nach oben hin verjüngen. Der Hals 4 kann dann senkrecht nach oben abstehen.

Das Thermometer 1 kann stiftartig sein. Das Thermometer 1 kann an einem Ende eine Spitze 6 aufweisen, um in ein Nahrungsmittel hineingestochen werden zu können. Das Thermometer 1 kann am anderen Ende einen Griff 7 aufweisen. Der Griff 7 kann konisch verlaufen. Der Griff 7 kann zum Ende hin kontinuierlich oder diskontinuierlich breiter werden. Das Gehäuse des Thermometers 1 kann mit Ausnahme des Griffs 7 aus einem elektrisch leitfähigen Material wie Metall bestehen. Der Griff 7 kann aus einem elektrisch isolierenden Material bestehen, um das elektrisch leitfähige Endstück 19 des Gehäuses von der elektrisch leitfähigen Hülle 20 des Gehäuses elektrisch zu trennen. Der Griff 7 besteht vorzugsweise aus einem hitzebeständigen Kunststoff. Innerhalb des Gehäuses kann ein Akku 21 vorhanden sein, der beispielsweise zur Vermeidung einer Überhitzung bei der Spitze 6 oder innerhalb des Griffs 7 angeordnet sein kann. Der Akku 21 kann mit dem Endstück 19 und der Hülle 20 so elektrisch verbunden sein, dass der Akku 21 über das Endstück 19 und die Hülle 20 aufgeladen werden kann.

Ein Temperatursensor 22 kann sich innerhalb der Spitze 6 oder unmittelbar angrenzend an die Spitze 6 des Thermometers 1 befinden. Ist die Spitze 6 des Thermometers 1 in ein Nahrungsmittel hineingesteckt, so kann die im Nahrungsmittel herrschende Temperatur gemessen werden. Ein weiterer Temperatursensor 23 kann sich ungefähr in der Mitte des Thermometers 1 befinden oder angrenzend an das Endstück 19, damit eine zweite Temperatur außerhalb eines Nahrungsmittels gemessen werden kann. Das Thermometer 1 kann über eine Elektronik verfügen, mit der ein Signal von einem Temperatursensor ausgewertet werden kann. Das Thermometer 1 kann eine Sendeeinrichtung umfassen, mit der ein Temperatursignal drahtlos an ein Empfangsgerät gesendet werden kann.

Die Spitze 6 kann ein in einen Durchgang 8 der Thermometerhalterung 2 hineingestecktes Ende sein. Die Spitze 6 kann auf dem Untergrund 5 aufliegen. In dem in der Figur 1 gezeigten aufgestellten Zustand der Thermometerhalterung 2 kann das Thermometer 1 beispielsweise senkrecht oder im Wesentlichen senkrecht vom waagerechten Untergrund 5 abstehen. Das Thermometer 1 nebst Thermometerhalterung 2 können so platzsparend bereitgehalten bzw. geparkt werden. Der Durchgang 8 ist eine Thermometerhalteeinrichtung der Thermometerhalterung 2, um das Thermometer 1 in einer gewünschten Position halten zu können. Die Spitze 6 kann daher auch durch den Durchgang 8 hindurchgesteckt werden.

Die Figur 1 zeigt, dass in der gezeigten Ansicht die Breite des Fußes 3 größer als die Höhe der Thermometerhalterung 2 sein kann. Vom Hals 4 aus gesehen kann der Fuß 3 nach links und nach rechts gleich weit abstehen. In dieser Ansicht führt der Durchgang 8 also durch die Mitte des Fußes 3 hindurch. Der Durchmesser des Durchgangs 8 kann so sein, dass der Griff 7 nicht oder nicht vollständig durch den Durchgang 8 hindurchgeschoben werden kann. Insbesondere bei dieser Ausgestaltung kann die Thermometerhalterung auch dazu genutzt werden, um das Thermometer 1 leicht wieder aus einem Nahrungsmittel herausziehen zu können. Die Thermometerhalterung 2 besteht daher vorzugsweise aus einem im Vergleich zu Metall schlecht wärmeleitendem Material wie zum Beispiel einem Elastomer oder einem anderen Kunststoff.

Die Figur 2 zeigt eine Ansicht von Thermometer 1 und Thermometerhalterung 2, die gegenüber der Figur 1 um 90° um eine senkrechte Achse verdreht ist. Der Durchgang 8 führt in dieser Ansicht nicht mehr durch die Mitte des Fußes 3 hindurch. Stattdessen steht der Fuß 3 auf der linken Seite deutlich weiter vom Hals 4 seitlich ab im Vergleich zu der rechten Seite des Fußes 3. Beispielsweise die weiter seitlich abstehende Seite des Fußes 3 kann eine beispielsweise geneigte, beispielsweise ebene Stützfläche 9 umfassen. Der Fuß 3 kann also zu einer Seite hin seitlich weiter abstehen als zur gegenüberliegenden Seite.

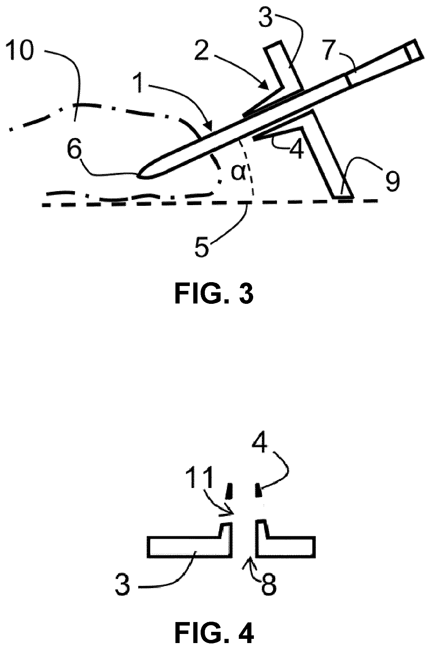

In der Figur 3 wird die Funktion der Stützfläche 9 gezeigt. Die Spitze 6 ist im Vergleich zu den Figuren 1 und 2 in umgekehrter Richtung durch den Durchgang 8 hindurchgesteckt, und zwar in einen Brotteig 10 hinein. Die Stützfläche 9 steht nun auf dem Untergrund 5 auf und stabilisiert dadurch die Position des Thermometers 1. Die Stützfläche kann so geneigt sein, dass das Thermometer 1 mit dem Untergrund 5 einen Winkel α einschließt, der 30° - 60° betragen kann. Die Stützfläche 9 kann dann vollflächig an dem Untergrund 5 anliegen. Weil der Fuß 3 vom Hals 4 aus gesehen in Richtung Stützfläche 9 relativ weit absteht, kann das Thermometer 1 von einer oberen Position in eine Speise, wie zum Beispiel einen Brotteig 10, hineingesteckt werden.

Anfänglich ist ein Brotteig 10 nicht fest genug, um ein Thermometer 1 zuverlässig halten zu können. Wie in der Figur 3 gezeigt, kann die Thermometerhalterung 2 mit Hilfe der Stützfläche 9 die Position eines Thermometers 1 auch in solchen Speisen wie Brotteig 10 hinreichend stabilisieren.

Die Figur 4 zeigt eine Ansicht der Thermometerhalterung 2, die gegenüber der Figur 1 um ca. 70° um die zuvor genannte senkrechte Achse verdreht ist. Der Durchgang 8 führt in dieser Ansicht nicht durch die Mitte des Fußes 3 hindurch. Der Fuß 3 steht zur linken Seite hin jedoch weniger seitlich ab im Vergleich zum Fall der Figur 2. Auch ist nun die Stützfläche 9 nicht mehr sichtbar. Stattdessen ist nun ein Durchgang 11 sichtbar, der ausschließlich durch den Hals 4 hindurch verläuft, durch den das Thermometer 1 hindurchgesteckt werden kann.

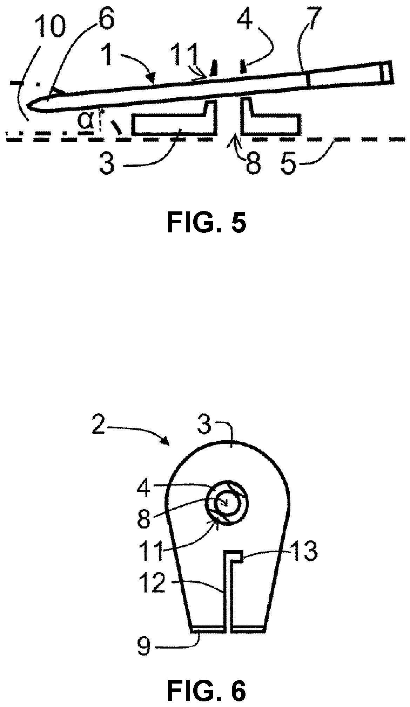

Wie in der Figur 5 gezeigt wird, kann durch den Durchgang 11 ein Ende 6 des Thermometers 1 hindurchgesteckt werden. Der Durchgang 11 ist also eine Thermometerhalteeinrichtung für das Thermometer 1. Das Thermometer 1 verläuft dann beispielsweise wie gezeigt nahezu horizontal und schließt mit einem waagerechten Untergrund 5 einen Winkel α von beispielsweise nicht mehr als 15° ein. Das Thermometer 1 kann sich dann von Anfang an relativ nah beim Untergrund 5 befinden. Das Thermometer 1 kann dann seitlich in eine Speise 10 hineingestochen werden. Das Thermometer 1 benötigt nun keine weitere Abstützung, um die gezeigte Position behalten zu können, weil das Thermometer im Wesentlichen waagerecht verläuft. Das Thermometer 1 befindet sich in einer Position, die geeignet ist, um Temperaturen von relativ dünnen Speisen 10 unabhängig von ihrer Konsistenz unmittelbar messen zu können.

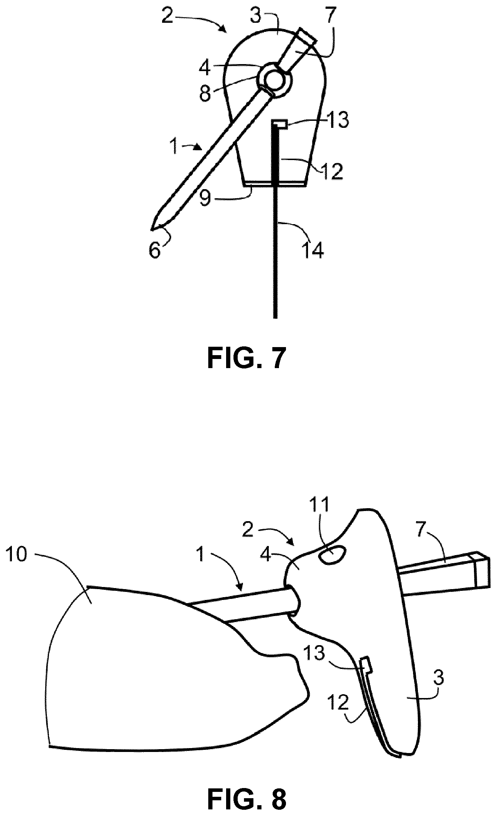

Die Figur 6 zeigt eine Aufsicht auf die Thermometerhalterung 2. Der Fuß 3 steht vom Hals 4 so weit ab, dass jeweils ein Finger auf den Fuß 3 links und rechts neben dem Hals 4 aufgelegt werden kann. Die Thermometerhalterung 2 kann dadurch gut ergriffen werden, um beispielsweise ein Thermometer 1 leicht aus einer Speise 10 herausziehen zu können. Der Fuß 3 kann mit einem Schlitz 12 versehen sein, der ein offenes Ende bei der Stützfläche 9 aufweist. Das andere Ende des Schlitzes 12 kann eine Verbreiterung 13 aufweisen. Schlitz 12 und Verbreiterung 13 können wie gezeigt L-förmig sein. Dadurch kann der in der Figur 6 gezeigte rechte Schenkel neben dem Schlitz 12 leichter elastisch gebogen werden als der links gezeigte Schenkel, wenn die Thermometerhalterung 2 aus einem elastisch biegsamen Material besteht. Es kann dann eine in der Figur 7 gezeigte Gefäßwand 14 so in den Schlitz hineingesteckt werden, dass die Thermometerhalterung durch Klemmwirkung am Gefäß befestigt ist. Die Klemmwirkung wird durch die Verbreiterung 13 unterstützt, da diese ein Aufspreizen der Schenkel erleichtert. Die Thermometerhalterung 2 kann durch Klemmwirkung mit der Gefäßwand 14 rutschfest verbunden sein. Ein Thermometer 1 kann dann so durch den Durchgang 11 hindurchgesteckt worden sein, dass das Thermometer 1 in das Gefäß, das die Gefäßwand 14 umfasst, hineinreicht. Die Figur 7 verdeutlicht, dass dann das Thermometer 1 mit der Innenwand 14 einen Winkel von ca. 40° bis 50° einschließen kann. Eine Temperatur im oberen Bereich des Gefäßes mit der Gefäßwand 14 kann nun gemessen werden.

In der Figur 8 wird eine zweite, dreidimensional gezeigte Ausführungsform einer Thermometerhalterung 2 sowie ein von der Thermometerhalterung 2 gehaltenes Thermometer 1 gezeigt. Die gezeigte in der Figur 8 gezeigte Situation entspricht der Situation aus der Figur 3. Der Vergleich der Figur 8 mit der Figur 3 verdeutlicht, dass das Thermometer 1 auch nahezu waagerecht beispielsweise in ein Fleischstück 10 hineingesteckt werden kann. Das Ende mit dem Schlitz 12 des Fußes 3 kann dennoch auf einem Untergrund zur Stabilisierung abgestellt sein. Dafür ist keine Abstützfläche erforderlich. Es kann ein Aufstellen der Enden der beiden Schenkel genügen, die durch den Schlitz 12 voneinander getrennt sind, wie dies in der Figur 8 angedeutet wird. Da die beiden Enden einen Abstand zueinander aufweisen, können diese die Lage des Thermometers 1 gut stabilisieren.

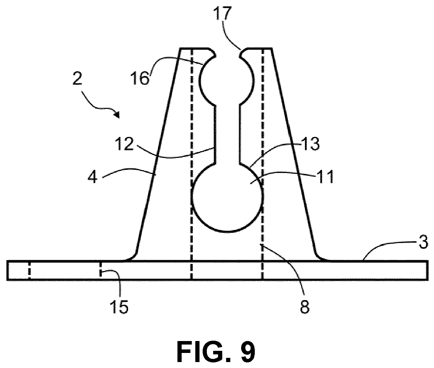

Die Figur 9 zeigt schematisch eine seitliche Ansicht auf eine dritte Ausführungsform einer Thermometerhalterung 2 für ein Halten eines Thermometers 1. Die beispielsweise aus einem Elastomer bestehende Thermometerhalterung 2 kann wiederum einen Fuß 3 und einen Hals 4 umfassen. Steht der Fuß 3 auf einem waagerechten Untergrund 5, dann steht der Hals 4 nach oben von dem Fuß 3 vorzugsweise senkrecht ab. Der Fuß 3 kann in Aufsicht gesehen kreisrund sein. Der Fuß 3 kann in Aufsicht gesehen vieleckig sein. Der Fuß 3 kann in Aufsicht gesehen beispielsweise quadratisch sein.

Auch bei der dritten Ausführungsform kann die maximale Breite bzw. ggfs. der Durchmesser des Fußes 3 größer als die Höhe der Thermometerhalterung 2 sein. Vom Hals 4 aus gesehen kann der Fuß 3 auch bei dieser dritten Ausführungsform nach links und nach rechts gleich weit abstehen. Der Hals 4 kann also auf dem Fuß 3 mittig angeordnet sein. Es kann einen durch gestrichelte Linien angedeuteten Durchgang 8 geben, der in der in der Figur 9 gezeigten Ansicht durch die Mitte des Fußes 3 hindurchführen kann. Der Durchmesser des Durchgangs 8 kann so sein, dass der Griff 7 eines Thermometers 1 nicht oder nicht vollständig durch den Durchgang 8 hindurchgeschoben werden kann. Ein zum Beispiel spitzes Ende 6 eines Thermometers 1 kann in den Durchgang 8 hineingesteckt und auch hindurch gesteckt werden. Der Griff 7 kann dann als Anschlag dienen, um zu verhindern, dass das Thermometer 1 vollständig durch den Durchgang 8 hindurchgeschoben werden kann.

Wie in der Figur 9 gezeigt wird, kann ein Durchgang 11 durch den Hals 4 hindurchführen. Ein zum Beispiel spitzes Ende 6 eines Thermometers 1 kann durch den Durchgang 11 hindurchgesteckt werden. Im Anschluss daran kann das Thermometer 1 waagerecht oder zumindest näherungsweise waagerecht durch die Thermometerhalterung 2 gehalten werden, wenn die Thermometerhalterung 2 wie in der Figur 9 gezeigt aufgestellt ist. Der Griff 7 eines Thermometers 1 kann dann wiederum als Anschlag dienen, der verhindern kann, dass ein Thermometer 1 vollständig durch den Durchgang 11 hindurchgeschoben werden kann.

Durch den Fuß 3 kann ein Durchgang 15 hindurchführen, der ebenfalls als Halteeinrichtung für ein Thermometer 1 dient. Diese Halteeinrichtung 15 soll ein Thermometer 1 insbesondere dann halten, wenn der Schlitz 12 mit einer Gefäßwand verbunden ist. Ein zum Beispiel spitzes Ende 6 eines Thermometers 1 kann durch den Durchgang 15 hindurchgesteckt werden. Der Griff 7 kann dann als Anschlag dienen, um zu verhindern, dass das Thermometer 1 vollständig durch den Durchgang 15 hindurchgeschoben werden kann.

Die dritte Ausführungsform der Thermometerhalterung 2 kann einen Schlitz 12 umfassen. Der Schlitz 12 dient wiederum einer Befestigung der Thermometerhalterung 2 an einer Gefäßwand. Der Schlitz 12 kann, wie in der Figur 9 gezeigt, von oben in den Hals 4 hineinführen. Der Schlitz 12 umfasst dann ein offenes Ende bei der Oberseite des Halses 4.

Der Schlitz 12 kann nahe bei seiner Eingangsöffnung 17 einen Durchgang 16 aufweisen. Der Durchmesser des Durchgangs 16 kann geringer als der Durchmesser der drei anderen Durchgänge 8, 11 und 15 sein. Wird eine Spitze bzw. ein spitzes Ende 6 eines Thermometers 1 in den Durchgang 16 hineingeschoben, so werden die beiden Schenkel des Schlitzes 12 auseinandergebogen. Ein Thermometer 1 wird dann klemmend gehalten. Der Durchgang 16 wirkt dann zusammen mit den Schenkeln des Schlitzes 12 wie eine Klammer. Alternativ kann ein Thermometer 1 von oben durch die Eingangsöffnung 17 hindurchgedrückt werden, bis das Thermometer 1 im Bereich des Durchgangs 16 klammerartig gehalten wird.

Die Durchgänge 11 und/oder 16 können so geneigt sein, dass ein Thermometer 1 durch den jeweiligen Durchgang 11, 16 nicht waagerecht gehalten wird, sondern schräg in Richtung Untergrund verläuft. Dies gilt dann, wenn die Thermometerhalterung 2 wie in der Figur 9 gezeigt aufgestellt ist. Die Durchgänge 11 und/oder 16 können waagerecht verlaufen, wenn die Thermometerhalterung 2 auf einem waagerechten Untergrund abgestellt ist. Die Durchgänge 11 und/oder 16 können dann also parallel zum Untergrund verlaufen.

Der Schlitz 12 kann eine sich nach außen aufweitende Eingangsöffnung 17 aufweisen, um beispielsweise das Hineinschieben einer Gefäßwand in den Schlitz 12 zu erleichtern.

Der Durchgang 11 kann eine Doppelfunktion erfüllen, wenn er, wie in der Figur 9 gezeigt, als kreisförmige Verbreiterung 13 für den Schlitz 12 dient. Der Durchgang 11 bildet dann einen verbreiterten Grund des Schlitzes 12.

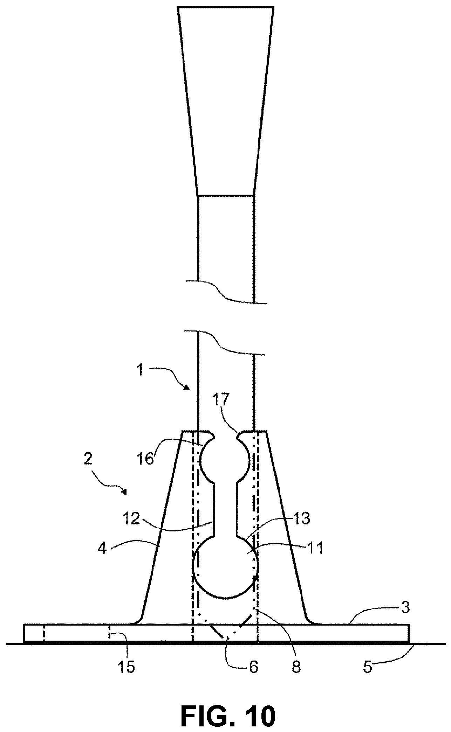

Die Figur 10 zeigt die Thermometerhalterung 2 aus der Figur 9. Die Thermometerhalterung 2 ist mit ihrem Fuß 3 auf einem waagerechten Untergrund 5 aufgestellt. Ein Thermometer 1 ist mit seiner Spitze 6, also seinem spitzen Ende, in den Durchgang 8 hineingesteckt. Der Untergrund 5 verhindert, dass die Spitze 6 durch den Durchgang 8 hindurchgesteckt werden kann. Das Thermometer 1 erstreckt sich senkrecht in die Höhe. Das Thermometer 1 befindet sich in einer Parkposition. Es kann in der Parkposition zusammen mit der Thermometerhalterung 2 platzsparend in einem Schrank untergebracht werden. Das Thermometer 1 kann zusammen mit der Thermometerhalterung 2 platzsparend nahe bei einem Kochfeld platziert werden und auf diese Weise zusammen mit der Thermometerhalterung 2 griffbereit während eines Kochvorgangs zur Verfügung stehen.

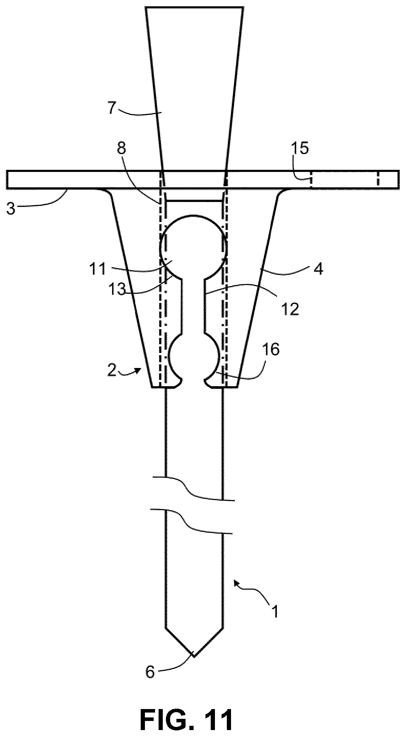

Die Figur 11 zeigt die Thermometerhalterung 2 aus den Figuren 9 und 10. Im Vergleich zur Figur 10 ist die Spitze 6 des Thermometers 1 in umgekehrter Richtung zunächst in den Durchgang 8 hineingesteckt worden. Anschließend ist die Spitze 6 und damit das Thermometer 1 weiter durch den Durchgang 8 hindurchgesteckt worden, und zwar bis zum Griff 7. Da der Griff 7 sich konisch zum Ende hin verbreitert, wirkt dieser als Anschlag und kann im Durchgang 8 reibschlüssig gehalten sein. Die Thermometerhalterung 2 dient nun ergänzend als wärmeisolierender Griff für das Thermometer 1, wenn die Thermometerhalterung 2 aus einem wärmeisolierenden Material wie zum Beispiel Kunststoff besteht. Der Kunststoff ist vorzugsweise elastisch, damit der Griff 7 zum Teil so in den Durchgang 8 hineingeschoben werden kann, dass der Griff 7 kraftschlüssig im Durchgang 8 gehalten wird. Alternativ oder ergänzend kann der Griff 7 aus einem elastischen Material bestehen, damit eine reibschlüssige Verbindung zu einem Durchgang hergestellt werden kann. Insbesondere kann der Fuß 3 der Thermometerhalterung 2 mit Fingern einer Hand umgriffen und daher dazu benutzt werden, um das Thermometer 1 leicht aus einer Speise herausziehen zu können.

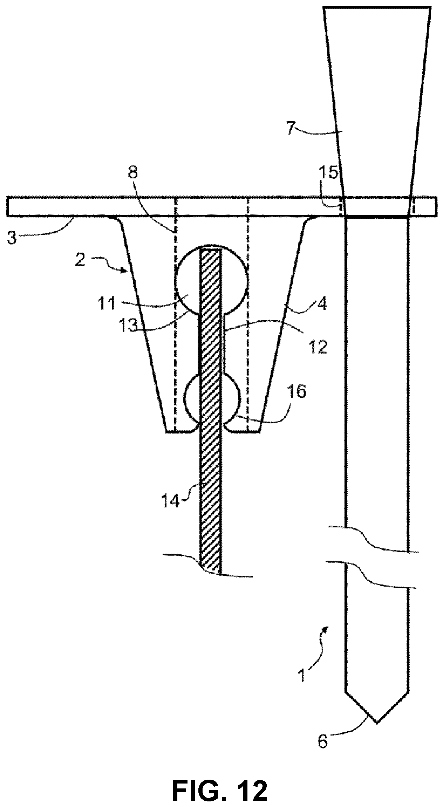

Die Figur 12 zeigt die Thermometerhalterung 2 aus den Figuren 9 bis 11, die an einer im Schnitt gezeigten Gefäßwand 14 befestigt ist. Die Gefäßwand 14 ist dafür in den Schlitz 12 der Thermometerhalterung 2 hineingeschoben. Die Spitze 6 des Thermometers 1 ist durch den Durchgang 15 im Fuß 3 der der Thermometerhalterung 2 hindurch gesteckt worden. Der verbreiterte Griff 7 des Thermometers 1 verhindert ein Durchrutschen des Thermometers 1 durch den Durchgang 15 hindurch. Die Spitze 6 reicht nun in das Gefäß mit der Gefäßwand 14 hinein. Das Thermometer 1 kann daher die Innentemperatur in einem Kochgefäß bzw. Speisenzubereitungsgefäß mit der Gefäßwand 14 messen. Das Thermometer 1 kann auch in eine Speise hineinreichen, die sich in dem Kochgefäß bzw. Speisenzubereitungsgefäß mit der Gefäßwand 14 befindet.

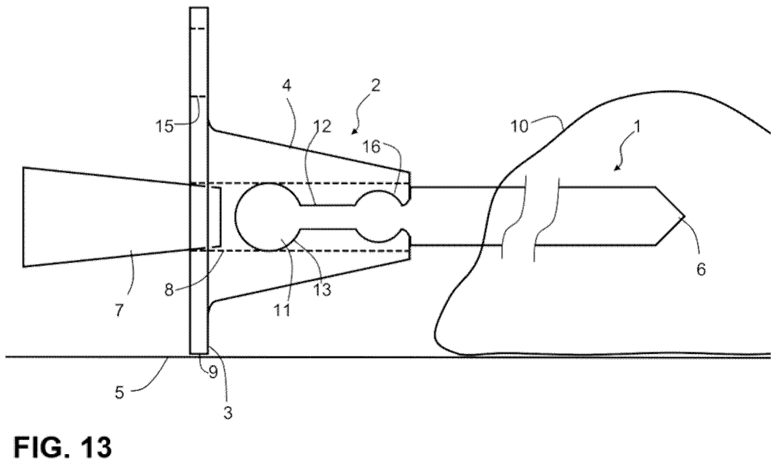

Die Figur 13 zeigt eine Temperaturmessung einer Speise 10 mithilfe eines Thermometers 1 und einer Thermometerhalterung 2. Die in der Figur 13 gezeigte Thermometerhalterung 2 weist im Unterschied zu den in den Figuren 9 bis 12 gezeigten Thermometerhalterungen 2 seitlich eine geradlinig verlaufende Stützfläche 9 auf. Ist die Spitze 6 des Thermometers 1 durch den Durchgang 8 hindurchgesteckt und in eine Speise 10 hineingesteckt, so kann die Thermometerhalterung 2 auf der Stützfläche 9 abgestützt sein. Das Abstützen der Thermometerhalterung 2 auf der Stützfläche 9 stabilisiert die Position des Thermometers 1 während der Temperaturmessung, da der vorzugsweise geradlinige Verlauf der Stützfläche 9 geradlinig auf einem Untergrund aufliegen kann. Die Stützfläche 9 kann aber auch beispielsweise konkav gewölbt sein. Die beiden Enden der konkaven Wölbung können dann auf einem Untergrund aufstehen und so die Position des Thermometers 1 stabilisieren.

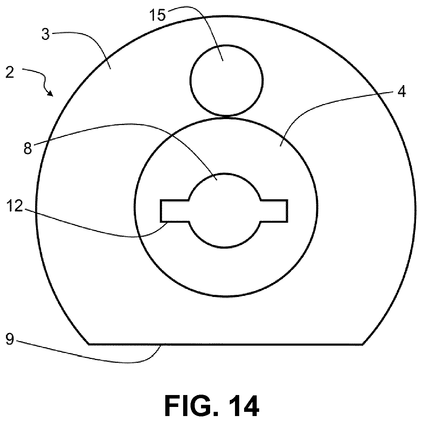

Die Figur 14 zeigt schematisch eine Aufsicht auf die Thermometerhalterung 2 aus der Figur 13. Die Figur 14 verdeutlicht, dass in Aufsicht gesehen der Fuß 3 nicht kreisrund ist, weil seitlich eine geradlinig verlaufende Stützfläche 9 vorhanden ist. Die Stützfläche 9 sorgt für eine Abweichung von einer Kreisform. Die Stützfläche 9 muss nicht eben sein, um stabilisierend wirken zu können. Für eine Stabilisierung ist nur wichtig, dass die Stützfläche 9 in Aufsicht gesehen geradlinig verläuft, wie dies in der Figur 14 gezeigt wird. Ansonsten kann die Stützfläche 9 zum Beispiel gleichmäßig bogenförmig verlaufen, wie dies bei einem Zylinder der Fall ist.

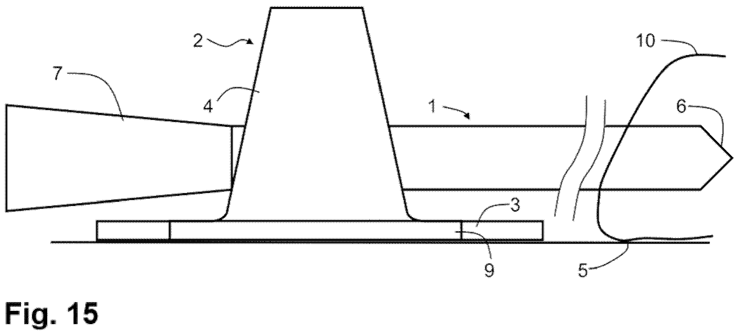

Die Figur 15 zeigt schematisch die Thermometerhalterung 2 und das Thermometer 1 aus den Figuren 13 und 14. Die Spitze 6 des Thermometers 1 ist durch den Durchgang 11 hindurchgesteckt und in eine Speise 10 hineingesteckt.

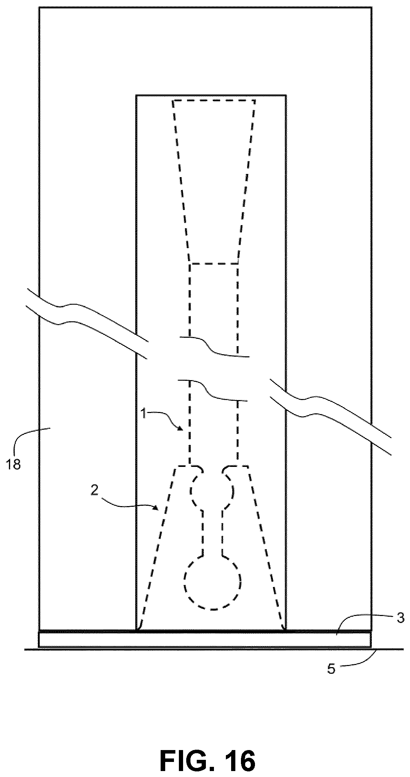

Das in der Figur 16 gezeigte System umfasst einen Behälter 18. Der Behälter 18 kann zylinderförmig sein. Der Behälter 18 kann an einer Stirnseite geschlossen sein, wie dies auf der Oberseite in der Figur 16 gezeigt wird. Die Thermometerhalterung 2 kann so an die Behälteröffnung angepasst sein, dass die Thermometerhalterung 2 eine Verschlusskappe für den Behälter 18 sein kann. Das Thermometer 1 kann dann im Behälter 18 sein. Der Behälter 18 kann so das im Behälter 18 untergebrachte Thermometer 1 vor äußeren Einwirkungen schützen. Das System mit dem Behälter 18 kann platzsparend und geschützt untergebracht werden.

Der Behälter 18 kann eine induktive Ladeeinrichtung umfassen, über die der Akku des Thermometers 1 induktiv aufgeladen werden kann. Der Behälter 18 kann also in einer Ausgestaltung den Akku des Thermometers 1 induktiv aufladen. Der Behälter 18 umfasst in diesem Fall eine Ladeelektronik, die für ein induktives Laden eingerichtet ist. Der Behälter 18 kann in einer Ausgestaltung eine Batterie umfassen, um zum Beispiel den Akku des Thermometers 1 aufladen zu können. Eine Batterie des Behälters 18 kann alternativ oder ergänzend dazu dienen, eine eigene Elektronik mit Strom zu versorgen. Der Behälter 18 kann in einer Ausgestaltung an eine externe Stromquelle angeschlossen werden, um den Akku des Thermometers 1 und/oder gegebenenfalls die dann wiederaufladbare Batterie des Behälters 18 aufladen zu können. In einer Ausgestaltung kann die Batterie aus dem Behälter 18 entnommen werden, um beispielsweise die Batterie danach aufladen zu können. Auch die Batterie des Thermometers 1 kann so untergebracht sein, dass leicht ausgetauscht werden kann.

Der Behälter 18 kann in einer Ausgestaltung eine drahtlose Sende- und/oder Empfangseinheit umfassen, um Daten an das Thermometer 1 drahtlos senden zu können bzw. um Daten von dem Thermometer 1 drahtlos empfangen zu können. Der Behälter 18 kann in einer Ausgestaltung ein Display umfassen, auf dem eine gemessene Temperatur des Thermometers 1 angezeigt werden kann. Eine drahtlose Sende- und/oder Empfangseinheit des Behälters 18 kann so ausgestaltet sein, dass diese nur über kurze Distanzen Daten von dem Thermometer 1 empfangen kann und diese über längere Distanzen an ein externes Steuergerät wie zum Beispiel eine Küchenmaschine senden kann. Auf diese Weise kann der Behälter 18 beispielsweise über Bluetooth Daten mit dem Thermometer 1 austauschen oder zumindest von dem Thermometer Daten empfangen. Beispielsweise über WLAN kann dann der Behälter 18 mit einer Küchenmaschine Daten austauschen. Der Behälter 18 kann also als Schnittstelle dienen, um den Energieverbrauch des Thermometers 1 während des Betriebs zu minimieren. Die Küchenmaschine kann dann so eingerichtet sein, dass über die Küchenmaschine ein Speisenzubereitungsgerät gesteuert wird, in dem das Thermometer 1 Temperaturen misst. Der Behälter 18 kann aber auch beispielsweise nur über Bluetooth oder nur über WLAN Daten empfangen und versenden, um eine Schnittstelle sein zu können. Der Behälter 18 kann über eine Recheneinrichtung verfügen, um Rechenaufgaben zu übernehmen und um das Thermometer dadurch von Rechenaufgaben zu entlasten. Es ist von Vorteil, den Behälter 18 für Rechenaufgaben und nicht das Thermometer 1 zu nutzen, um den Energieverbrauch des Thermometers 1 zu minimieren. Der Behälter 18 kann nämlich beispielsweise unproblematisch über eine vergleichsweise große eigene Batterie verfügen und/oder beispielsweise unproblematisch an eine externe Stromquelle angeschlossen werden.

Es sind auch andere Ausführungsformen einer Thermometerhalterung 2 möglich. Beispielsweise kann sich eine weitere Ausführungsform von der in der Figur 9 gezeigten dritten Ausführungsform unterscheiden, weil der durch den Hals 4 hindurchführende Durchgang 16 nicht vorhanden ist.

Es kann neben dem Durchgang 15 und dem Durchgang 8 einen dritten Durchgang geben, der durch den Fuß 3 hindurchführt. Es ist dann aus Platzgründen von Vorteil, dass der Durchgang 15 und der dritte Durchgang so angeordnet sind, dass sich der in der Figur 14 gezeigte Durchgang 8 zwischen den anderen beiden Durchgängen befindet. Die drei Durchgänge können also entlang einer geraden Linie angeordnet sein.

Es ist bei drei Durchgängen, die durch den Fuß 3 hindurchführen, aus Platzgründen zweckmäßig, dass der Durchgang 15 nicht wie in der Figur 14 gezeigt der Stützfläche 9 gegenüberliegend beim Außenumfang angeordnet ist. Stattdessen ist es dann von Vorteil, dass die drei Durchgänge entlang einer gedachten geraden Linie angeordnet sind, die parallel zu der in der Figur 14 gezeigten Stützfläche 9 verläuft. Der Durchgang 15 befindet sich dann beispielsweise links von dem in der Figur 14 gezeigten Durchgang 8 und der dritte Durchgang rechts von dem in der Figur 14 gezeigten Durchgang 8.

Es können auch mehr als drei Durchgänge durch den Fuß 3 hindurchführen, also zum Beispiel vier Durchgänge. Es können nur zwei Durchgänge beim Außenumfang des Fußes vorhanden sein. Zwischen den beiden dann außen liegenden Durchgängen kann sich ein Sackloch befinden, in das das Thermometer hineingesteckt werden kann. Das Sackloch kann beim Grund des Fußes enden und dazu dienen, das Thermometer 1, wie in den Figuren 1, 2 und 10 gezeigt, senkrecht aufstellen zu können, wenn die Aufstellfläche des Fußes 3 auf einem ebenen Untergrund abgestellt ist. Das Thermometer 1 kann dann also nicht durch den Fuß 3 hindurchgeschoben werden, weil das Sackloch beim Fuß 3 geschlossen ist.

Der in der Figur 14 gezeigte Schlitz 12 muss nicht von rechts nach links und damit parallel zur Stützfläche 9 verlaufen. Stattdessen kann es zweckmäßig sein, dass der in der Figur 14 gezeigte Schlitz 12 von oben nach unten verläuft und damit senkrecht zur in der Figur 14 gezeigten Stützfläche 9. Dieser Verlauf des Schlitzes 12 ist beispielsweise dann zu bevorzugen, wenn wie zuvor beschrieben drei Durchgänge vorhanden sind, die entlang der genannten gedachten geraden Linie angeordnet sind. Anstelle von drei Durchgängen können zwei Durchgänge und ein Sackloch vorhanden sein, die entlang einer Linie angeordnet sind.

Gibt es zusätzlich zu dem in der Figur 14 gezeigten Durchgang 8 oder zusätzlich zu dem Sackloch, das den Durchgang 8 ersetzt, zwei weitere Durchgänge, also den Durchgang 15 und einen dritten Durchgang, dann ist von Vorteil, dass die drei Durchgänge ein Thermometer 1 auf drei verschiedenen Arten halten können. Wird ein Thermometer 1 durch den mittleren Durchgang 8 gehalten, dann erstreckt sich das Thermometer 1 beispielsweise wie in der Figur 13 gezeigt parallel zur Erstreckungsrichtung des Halses 4 und damit senkrecht zur Aufstellfläche des Fußes 3. Wird ein Thermometer 1 durch den zweiten Durchgang 15 gehalten, dann schließt das Thermometer 1 beispielsweise einen ersten spitzen Winkel mit der Erstreckungsrichtung des Halses 4 ein und weicht damit von dem ab, was in der Figur 12 gezeigt wird. Das Thermometer 1 verläuft dann also nicht parallel zur Erstreckungsrichtung des Halses 4, wie dies in der Figur 12 gezeigt wird. Wird ein Thermometer 1 durch den dritten Durchgang gehalten, dann schließt das Thermometer 1 beispielsweise einen zweiten spitzen Winkel mit der Erstreckungsrichtung des Halses 4 ein. Der zweite spitze Winkel ist dann beispielsweise größer als der erste spitze Winkel.

Durch den Fuß kann auch nur ein Durchgang hindurchführen und zusätzlich ein Sackloch für ein zumindest im Wesentlichen senkrechtes Aufstellen vorhanden sein. Der Durchgang ist dann vorzugsweise so ausgerichtet, dass das Thermometer durch den Durchgang nicht senkrecht zur Aufstellfläche des Fußes 3 verläuft.

In der Figur 14 werden Durchgänge mit rundem Querschnitt gezeigt. Es ist aber auch möglich, dass ein oder mehrere Durchgänge einen eckigen Querschnitt aufweisen. Beispielsweise können sämtlich drei genannten Durchgänge einen quadratischen Querschnitt aufweisen. Dies ist insbesondere dann zu bevorzugen, wenn der Griff 7 ebenfalls einen quadratischen Querschnitt so aufweist, dass der Griff drehfest durch einen jeden Durchgang gehalten werden kann und zwar vorzugsweise klemmend gehalten werden kann. Das Thermometer 1 kann darüber hinaus einen anderen Querschnitt aufweisen, so zum Beispiel einen kreisrunden Querschnitt.

Der Querschnitt des Griffs 7 wird zum angrenzenden Ende des Thermometers 1 hin vorzugsweise kontinuierlich größer, so dass der Griff 7 nur zum Teil in einen Durchgang hineingesteckt werden kann. Der Durchgang 15 und/oder der genannte dritte Durchgang können so sein, dass ein Thermometer 1, das in einen der beiden Durchgänge hineingesteckt worden ist, um mehr als 5°, vorzugsweise um mehr als 10°, verschwenkt werden kann und eine solche Schwenkbewegung nicht mehr möglich ist, wenn der sich Griff 7 in maximal möglicher Weise in einen genannten Durchgang hineingesteckt worden ist. Um dies zu erreichen, kann ein Durchgang an einer Seite beispielsweise einen quadratischen oder kreisrunden Querschnitt aufweisen, der zur anderen Seite hin zunehmend länglicher wird. Beispielsweise kann der Querschnitt des Durchgangs dann auf der anderen Seite rechteckig oder ein anders geformtes Langloch sein. Dadurch werden die Einsatzmöglichkeiten weiter gesteigert.

Die Thermometerhalterung 2 und/oder der Griff 7 können aus einem temperaturbeständigen Kunststoff bestehen. Vorzugsweise ist der Kunststoff so ausgewählt, dass dieser üblichen maximalen Backofentemperaturen von bis wenigstens 200 °C oder bis wenigstens 220 °C ausgesetzt werden kann.

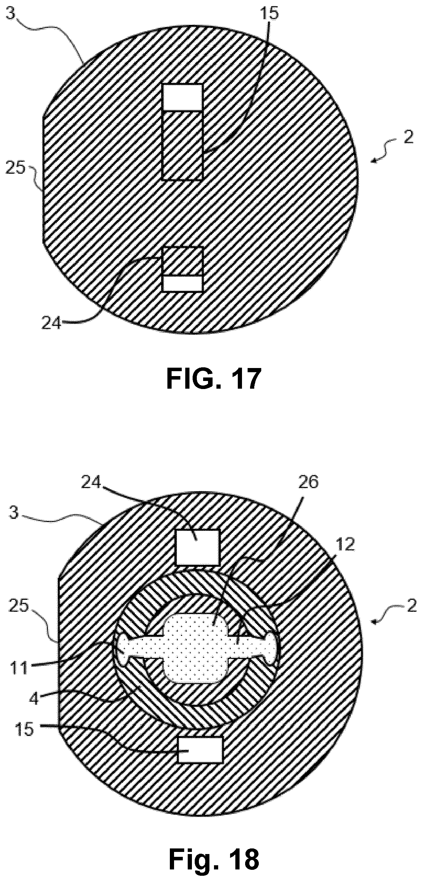

Die Figur 17 zeigt einen Fuß 3 einer weiteren Thermometerhalterung 2 von der Unterseite. Die Unterseite des Fußes 3 ist überwiegend kreisrund. Diese weist aber eine geradlinig verlaufende Kante 25 auf. Diese Form der Unterseite des Fußes 3 ist an die Form einer Stirnseite eines nachfolgend gezeigten Behälters angepasst. Die Kante 25 kann wie die Stützfläche 9 für ein Abstützen verwendet werden. Zwei Durchgänge 15 und 24 führen durch den Fuß 3 hindurch. Durch einen jeden Durchgang 15, 24 kann ein Thermometer 1 hindurchgesteckt werden. Das Thermometer 1 schließt nach einem Hindurchstechen mit der Unterseite des Fußes 3 einen Winkel ein, der kleiner als 90° ist. Die Größe des Winkels hängt davon ab, durch welchen der beiden Durchgänge 15, 24 das Thermometer 1 hindurchgesteckt worden ist. Wird das Thermometer 1 durch den Durchgang 24 hindurchgesteckt, so ist der Winkel beispielsweise größer im Vergleich zu dem Fall, dass das Thermometer 1 durch den Durchgang 15 hindurchgesteckt worden ist.

Die beiden Durchgänge 15, 24 können außermittig angeordnet sein, wie dies in der Figur 17 gezeigt wird.

Die Figur 18 zeigt die weitere Thermometerhalterung 2 aus der Figur 17 von der Oberseite. Es kann einen Durchgang 11 beispielsweise nahe beim Fuß 3 geben, der durch den Hals 4 hindurchführt. Ein durch den Hals 4 hindurchführender Schlitz 12 kann in den Durchgang 11 einmünden. Der Durchgang 11 kann für ein Hindurchstecken und Halten eines Thermometers 1 genutzt werden. Der Durchgang 11 kann außerdem dazu dienen, einen nachfolgend gezeigten Steg in einer Ausnehmung eines nachfolgend gezeigten Behälters zu umgreifen, um die Thermometerhalterung 2 in der Ausnehmung formschlüssig halten zu können. Es kann ein Sackloch 26 vorhanden sein, in das das Thermometer 1 für ein Abstellen hineingesteckt werden kann. Das Sackloch 26 kann von oben in den Hals 4 hineinführen. Das Sackloch 26 kann einen quadratischen Querschnitt aufweisen oder einen näherungsweis quadratischen Querschnitt mit leichten Rundungen aufweisen. Der quadratische Querschnitt mit leichten Rundungen kann dafür dienen, einen quadratischen Querschnitt des Griffs 7 besonders leicht in das Sackloch 26 einsetzen zu können. Damit der Griff 7 leicht in das Sackloch 26 hineingesteckt und dennoch klemmend gehalten werden kann, kann die maximale Breite des Sacklochs 26 etwas größer als die maximale Breite bzw. Seitenlänge des Griffs 7 sein. Beispielsweise kann die maximale Seitenlänge des Griffs 7 sieben Millimeter betragen. Die maximale Breite des Sacklochs 26 kann dann mehr als sieben Millimeter betragen und beispielsweise maximal 9 mm oder maximal 8 mm betragen. Der Querschnitt des Sacklochs 26 kann dann so leicht gerundet sein, dass dadurch der Griff 7 im Sackloch 26 klemmend gehalten werden kann. Alternativ oder ergänzend kann der Querschnitt des Sacklochs 26 in Richtung Fuß 3 abnehmen. Wird der Griff 7 in das Sackloch 26 hineingedrückt, so kann schließlich das Thermometer 1 aufgrund des abnehmenden Querschnitts klemmend gehalten werden. Ist der Griff 7 in das Sackloch hineingesteckt, so kann die Kombination aus Thermometerhalterung 2 und Thermometer 1 dazu genutzt werden, um das Thermometer 1 mit Kraft beispielsweise in ein Stück Fleisch hineindrücken zu können. Durch die Thermometerhalterung 2 lassen sich dann Druckstellen in einer Hand vermeiden.

Die beiden Durchgänge 15 und 24 können, wie in den Figuren 17 und 18 gezeigt, einen rechteckigen Querschnitt aufweisen. Das Thermometer 1 oder zumindest seine Hülle 20 können einen kreisförmigen Querschnitt aufweisen. Besteht die Thermometerhalterung 2 aus einem nachgiebigen Material und ist der Querschnitt des Thermometers 1 etwas größer als eine schmale Seite des rechteckigen Querschnitts, so kann das in einen Durchgang 15, 24 hineingesteckte Thermometer 1 kraftschlüssig gehalten werden. Die von dem kreisrunden Querschnitt abweichende Rechteckform ermöglicht es, dass das Thermometer 1 ohne großen Kraftaufwand leicht in einen Durchgang 15, 24 hineingesteckt und auch leicht wieder herausgezogen werden kann. Ursächlich dafür ist, dass das Thermometer 1 dann nur an zwei Stellen anliegt und damit keine großen Reibungskräfte zu überwinden sind, um das Thermometer 1 hineinstecken und wieder herausziehen zu können.

Die beiden Durchgänge 15 und 24 können auch einen von der Rechteckform abweichenden Querschnitt aufweisen, um diesen Vorteil zu erzielen. Der von der Rechteckform abweichende Querschnitt sollte dann so sein, dass das Thermometer 1 an nur wenigen Stellen anliegt, beispielsweise an maximal vier Stellen.

Die beiden Durchgänge 15 und 24 können einen quadratischen Querschnitt aufweisen. Das Thermometer 1 oder zumindest seine Hülle 20 können einen kreisförmigen Querschnitt aufweisen. Das Thermometer 1 liegt dann zwar an vier Stellen und nicht wie beim Rechteck lediglich an zwei Stellen an, wenn der Durchmesser des Thermometers 1 geringfügig größer als die Seiten des Rechtecks ist. Dafür kann das Thermometer 1 dann nicht seitlich verrutschen. Die Hülle 20 kann beispielsweise einen Durchmesser von 6 mm aufweisen. Die Länge der Seiten des quadratischen Querschnitts sind dann geringer als 6 mm. Die Länge der Seiten des quadratischen Querschnitts betragen dann vorzugsweise wenigstens 5 mm oder wenigstens 5,5 mm. Die Länge der Seiten des quadratischen Querschnitts betragen beispielsweise 5,4 mm bis 5,8 mm.

Zu vermeiden ist, dass der gesamte Außenumfang des Thermometers 1 mit Druck am gesamten Innenumfang eines Durchgangs 14, 24 anliegt, um unnötig hohe Reibungskräfte zu vermeiden. Es ist daher auch möglich, dass ein Durchgang 15, 24 einen quadratischen Querschnitt aufweist und das Thermometer 1 einen kreisrunden Querschnitt. Der kreisrunde Querschnitt kann dann an vier Stellen anliegen. Dieser Fall ist zwar in Bezug auf den Kraftaufwand etwas ungünstiger im Vergleich zum Fall des rechteckigen Querschnitts, aber besser als ein Anliegen über den gesamten Umfang. Von Vorteil kann dafür sein, dass eine gewünschte Position besonders zuverlässig eingehalten werden kann.

Ein Durchgang muss nicht exakt quadratisch sein, damit sich dieser Vorteil erzielen lässt. Es kann genügen, dass ein Durchgang 15, 24 lediglich näherungsweise so quadratisch ist, dass der kreisrunde Querschnitt des Thermometers 1 an nur vier Stellen anliegt, wenn das Thermometer in den Durchgang 15, 24 hineingesteckt worden ist.

Der Durchgang 15, 24 kann im Schnitt dreieckig oder näherungsweise dreieckig sein. Das in den Durchgang 15, 24 hineingesteckte Thermometer 1 kann dann an nur drei Stellen anliegen.

Der Durchmesser des Thermometers 1 kann einen von einem Kreis abweichenden Querschnitt haben. Beispielsweise kann der Querschnitt oval oder eckig sein. Dennoch ist es möglich, dass das Thermometer 1 dann nur an wenigen Stellen anliegt, damit das Thermometer 1 leicht aus einem Durchgang 15, 24 herausgezogen und hineingesteckt werden kann. Das Thermometer 1 kann vor allem dann leicht hineingesteckt werden, wenn dieses eine Spitze 6 aufweist. Ein kreisrunder Querschnitt des Thermometers 1 ist aber mit dem Vorteil verbunden, dass nicht auf eine Ausrichtung geachtet werden muss, wenn das Thermometer 1 in einen Durchgang 15, 24 hineingesteckt wird.

Wenn sich die Form des Querschnitts des Thermometers 1 über seine Länge ändert, dann genügt es, dass zumindest eine Querschnittsform beim Thermometer 1 vorhanden ist, die wie beschrieben nicht über den gesamten Außenumfang am Innenumfang eines Durchgangs 15, 24 anliegt. Es kann daher genügen, dass beispielsweise nur eine zuvor beschriebene Hülle 20 des Thermometers 1 einen Querschnitt aufweist, der nicht über den gesamten Umfang anliegen kann.

Der Querschnitt des Sacklochs 26 kann aus vergleichbaren Gründen eine vom Querschnitt des Thermometers 1 abweichende Form aufweisen.

Das Sackloch 26 kann nur dafür vorgesehen sein, das Thermometer 1 abstellen zu können, ähnlich wie dies in der Figur 2 gezeigt wird. In diesem Fall können die Form und Dimension des Querschnitts des Sacklochs 26 so gewählt sein, dass das Thermometer 1 oder zumindest seine Hülle 20 mit Spiel in das Sackloch 26 eingesetzt werden kann. Das Thermometer 1 kann dann besonders schnell und einfach abgestellt werden. Der Querschnitt des Sacklochs 26 kann beispielsweise quadratisch oder zumindest näherungsweise quadratisch sein. Der Querschnitt des Thermometers 1 kann beispielsweise kreisrund sein, um besonders leicht in das Sackloch 26 mit Spiel eingesetzt werden zu können. Auch in diesem Fall kann sich der Querschnitt des Thermometers 1 ändern. So kann eine Hülle 20 des Thermometers 1 einen kreisrunden Querschnitt aufweisen. Der Griff 7 kann einen davon abweichenden Querschnitt aufweisen. Der an die Hülle 20 angrenzende Querschnitt des Griffs 7 kann auch zunächst kreisrund wie der Querschnitt der Hülle 20 sein. Dieser zunächst kreisrunde Querschnitt kann dann beispielsweise in einen quadratischen Querschnitt übergehen. Der quadratische Querschnitt kann sich dann in Richtung Endstück 19 verbreitern. Der kreisrunde Querschnitt kann beispielsweise einen Durchmesser von 5 bis 7 mm, so zum Beispiel 6 mm aufweisen. Der maximale quadratische Querschnitt kann dann eine Seitenlänge aufweisen, die ein bis zwei Millimeter größer als der kreisrunde Querschnitt sein kann. Beträgt der Durchmesser des kreisrunden Querschnitts beispielsweise 6 mm, dann kann die maximale Seitenlänge des quadratischen Querschnitts bei 7 mm liegen. Das Endstück 19 kann dann ebenfalls einen quadratischen Durchmesser mit einer Seitenlänge von 6 mm aufweisen. Die Seiten des Endstücks 19 können dann parallel zu den Seiten des quadratischen Querschnitts des Griffs 7 verlaufen.

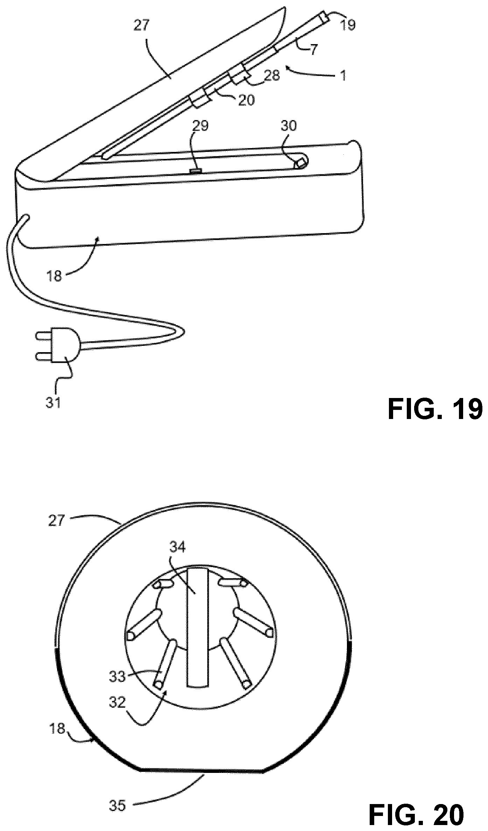

Die Figur 19 zeigt einen weiteren Behälter 18 für ein Aufbewahren eines Thermometers 1. Der Behälter 18 ist mit einem Deckel 27 schwenkbar verbunden. Gezeigt wird eine geöffnete Stellung des Deckels 27. Der Behälter 18 kann durch den Deckel 27 geschlossen werden, indem der Deckel 27 nach unten geschwenkt wird.

An der Innenseite des Deckels 27 kann eine Halteeinrichtung für das Halten des Thermometers 1 am Deckel 27 angebracht sein. Die Halteeinrichtung kann, wie gezeigt, eine Mehrzahl von Klammern 28 umfassen. Die Klammern 28 können so sein, dass das Thermometer 1 in die Klammern 28 hineingedrückt werden kann und/oder dass das Thermometer 1 parallel zum Deckel 27 in die Klammern 28 hineingeschoben werden kann. Die Klammern 28 können so geformt sein, dass das Thermometer 1 nur noch aus den Klammern 28 parallel zum Deckel 27 herausgezogen werden kann. Wird das in der Figur 19 gezeigte Thermometer 1 parallel zum Deckel 27 in Richtung unteres Ende des Deckels 27 bewegt, so kann der Deckel 27 schließlich geschlossen werden. Der Deckel 27 kann zusammen mit den Klammern 28 in einem Arbeitsschritt aus Kunststoff hergestellt worden sein, so zum Beispiel durch Spritzguss.

Im Behälter 18 kann es als Ladekontakte eine Klammer 29 und/oder an einer Stirnseite des Behälterinnenraums ein Federelement 30 geben. Von der Klammer 29 ist nur ein Schenkel zu sehen, da der gegenüberliegende Schenkel von der vorderen Seitenwand des Behälters 18 verdeckt wird. Das Federelement 30 ist an seiner Oberseite rampenförmig nach rechts außen gebogen, um ein Verbinden mit dem Endstück 19 des Thermometers 1 zu erleichtern. Die beiden Ladekontakte 29, 30 bestehen aus einem elektrisch leitenden Material wie zum Beispiel Metall.

Wird der Deckel 27 mit dem von der Halteeinrichtung 28 gehaltenen Thermometer 1 geschlossen, dann umklammert die Klammer 29 die Hülle 20 des Thermometers 1. Das Federelement 30 wird durch seine obere Rampenform durch das Endstück 19 nach rechts vorgespannt. Der Akku des Thermometers 1 kann nun geladen werden.

Der Behälter 1 kann eine Kabelverbindung mit elektrischem Stecker 31 aufweisen, um den Behälter 18 an eine externe Stromquelle anschließen zu können.

Die Figur 20 zeigt eine Stirnseite des Behälters 18 aus Figur 19. Die Stirnseite umfasst eine Ausnehmung 32, in die der Hals 4 der in den Figuren 17 und 18 gezeigten Thermometerhalterung 2 hineingesteckt werden kann. Die umlaufende Seitenwand der Ausnehmung 32 kann nach innen abstehende Rippen 33 umfassen. Durch die Rippen 33 kann der Hals 4 kraftschlüssig gehalten werden. Dennoch kann der Hals problemlos in die Ausnehmung 32 hineingesteckt werden, weil nicht der gesamte Außenumfang des Halses 4 kraftschlüssig am Innenumfang der Ausnehmung 32 für ein kraftschlüssiges Halten anliegen muss.

Der Querschnitt der Ausnehmung 32 kann sich zum Grund hin verjüngen und damit an eine konische Form des Halses 4 vorteilhaft angepasst sein.

Die Rippen 33 erstrecken sich bevorzugt ausgehend von der Stirnseite des Behälters 18 in Richtung Grund der Ausnehmung 32, wie dies in der Figur 20 gezeigt wird. Dies erleichtert weiter das Einsetzen des Halses 4 in die Ausnehmung 32.

In der Ausnehmung 32 kann ein Steg 34 oder eine Platte 34 vorhanden sein. Der Steg 34 kann sich von einer Seite der Ausnehmung 32 zu einer gegenüberliegenden Seite der Ausnehmung erstrecken und an diesen Seiten befestigt sein. Dies kann auch für eine Platte 34 gelten.

Der Steg 34 kann vom Schlitz 12 des Halses 4 umgriffen werden.

Der Steg 34 kann so angeordnet sein, dass sich der Steg 34 innerhalb des Schlitzes 12 des Halses 4 befinden muss, um den Hals 4 in die Ausnehmung 32 einsetzen zu können. Dadurch wird erreicht, dass der Hals 4 für ein Einsetzen ausgerichtet werden muss. Dies kann auch für eine Platte 34 gelten.

Der Steg 34 kann im Mittelbereich so verbreitert sein, dass seine Form an die Form des Schlitzes 12 zuzüglich der Querschnittsform des Sacklochs 26 angepasst ist. Dies kann den Halt in der Ausnehmung 32 weiter verbessert stabilisieren. Ist eine Platte 34 vorgesehen, die sich von einer Seite zu einer gegenüberliegenden Seite der Ausnehmung 32 erstreckt, so kann die Platte 34 ebenfalls eine Ausrichtung sicherstellen. Im Unterschied zum Steg 34 gibt es keine Hinterschneidung, wenn die Platte 34 mit dem Grund der Ausnehmung 32 verbunden ist. Dies erleichtert eine einteilige Herstellung der Ausnehmung 32 zusammen mit den Rippen 33 und der Platte 34, beispielsweise durch Kunststoffspritzguss. Es müssen dann also nicht mehre Teile zusammengefügt werden. Der Schlitz 12 der Thermometerhalterung 2 kann etwas schmaler als die Dicke der Platte 34 sein, damit die Thermometerhalterung 2 durch Klemmwirkung in der Ausnehmung 32 gehalten werden kann. Die Platte 34 kann beispielsweise 3 mm dick sein. Die Breite des Schlitzes 12 kann dann weniger als 3 mm betragen und beispielsweise wenigstens 2 mm oder wenigstens 2,5 mm breit sein.

Damit die Platte 34 leicht in den Schlitz 12 eingefädelt werden kann, kann der Schlitz 12 an seiner Oberseite des Halses 4 etwas verbreitert sein. Alternativ oder ergänzend kann sich die Breite des Schlitzes in Richtung Fuß 3 bzw. in Richtung eines Durchgangs 11 leicht verjüngen, um klemmend gehalten werden zu können.

Der Behälter 18 kann eine ebene Unterseite 35 für ein Abstellen des Behälters 18 aufweisen. Schließt der Schlitz 12 des Halses 4 mit der Kante 25 der Thermometerhalterung 2 einen rechten Winkel ein, wie dies in den Figuren 17 und 18 gezeigt wird, dann kann der Steg bzw. die Platte 34 mit der Unterseite 35 ebenfalls einen rechten Winkel einschließen. Es kann dadurch erreicht werden, dass die Kante 25 an die Unterseite 35 angrenzt und parallel zur Unterseite 35 verläuft, wenn der Hals 4 in die Ausnehmung 32 eingesetzt ist. Die eingesetzte Thermometerhalterung 2 beeinträchtigt dann nicht das Abstellen des Behälters 18 auf einem Untergrund.

Der maximale Durchmesser des Behälters 18 kann beispielsweise 38 bis 42 mm betragen. Dann beträgt der maximale Durchmesser des Fußes 3 ebenfalls 38 bis 42 mm. Der maximale Durchmesser des Fußes 3 kann also gleich dem maximalem Durchmesser des Fußes 3 sein.

Ist der Hals 4 maximal weit in die Ausnehmung 32 hineingeschoben worden, dann kann in einer Ausführungsform der Durchgang 11 den Steg 34 so umgreifen, dass dadurch die Thermometerhalterung 2 formschlüssig gehalten wird. Der Steg 34 ist dann auf Höhe des Durchgangs 11 angeordnet. Der Steg 34 kann aber auch nur für eine Ausrichtung vorgesehen und in einer dafür geeigneten Höhe angeordnet sein. Der Steg 34 kann dann nicht auf Höhe des Durchgangs 11 angeordnet sein, wenn die Thermometerhalterung 2 in die Ausnehmung 32 eingesetzt ist. Ist der Steg 34 nur für eine Ausrichtung vorgesehen, dann kann der Steg 34 beispielsweise nahe beim Grund der Ausnehmung 32 angeordnet sein, wenn der Durchgang 11 nahe beim Fuß 3 angeordnet ist.

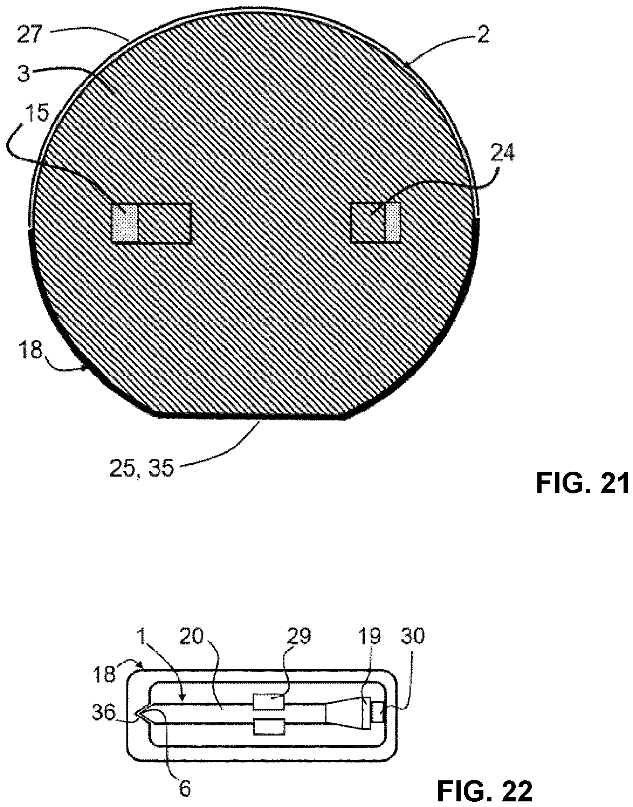

In der Figur 21 wird der eingesetzte Zustand der Thermometerhalterung 2 gezeigt. Die Kante 25 der Thermometerhalterung 2 ist parallel zur Behälterunterseite 35 ausgerichtet und grenzt an die Behälterunterseite 35 an. Der Behälter 18 kann daher auch dann störungsfrei abgestellt werden, wenn die Thermometerhalterung 2 in die Ausnehmung 32 eingesetzt ist.

In der Figur 22 wird eine Aufsicht auf einen wie zuvor beschriebenen Behälter 18 gezeigt, bei dem der Deckel 27 entfernt wurde. Skizziert wird, wie ein Thermometer 1 im Behälter 18 angeordnet ist. Die Spitze 6 des Thermometers reicht in eine spitze Ausnehmung 36 im Innenraum des Behälters 18 hinein. Das Endstück 19 des Thermometers 1 liegt an der dann vorgespannten Feder 30 an, die das Thermometer in Richtung spitze Ausnehmung 36 drücken kann. Die Klammer 29 liegt an der Hülle 20 des Thermometers 1 an.

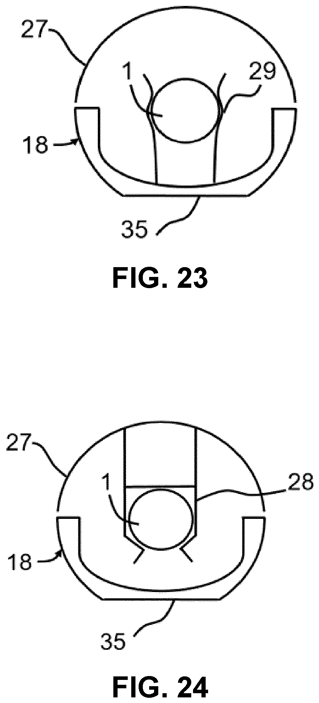

In der Figur 23 wird ein Schnitt durch den Behälter 18 gezeigt, der die an dem Thermometer 1 anliegende Klammer 29 zeigt. In der Figur 24 wird ein Schnitt durch den Behälter 18 gezeigt, der das Halten des Thermometers 1 durch die Halteeinrichtung 28 skizziert.

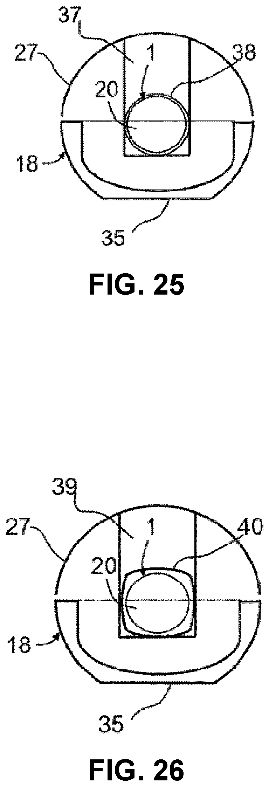

In der Figur 25 wird eine weitere Ausführungsform eines Behälters 18 im Schnitt gezeigt. Von dem Deckel 27 kann eine Wand 37 nach unten abstehen. Die Wand 37 kann eine Öffnung 38 als Einschub umfassen. Die Öffnung 38 kann kreisrund sein. Der Durchmesser der Öffnung 38 kann so sein, dass die Hülle 20 des Thermometers 1 mit geringem Spiel in die Öffnung 38 hineingeschoben werden kann. Die Öffnung 38 ist dann eine Halteeinrichtung des Deckels 27 oder zumindest Teil einer Halteeinrichtung des Deckels 27, um das Thermometer 1 am Deckel halten zu können. Ist der Deckel 27 geschlossen worden, dann kann dann das im Behälter befindliche Thermometer 1 durch die Öffnung 38 gehalten werden.

Es können mehrere Wände 37 mit Öffnungen 38 vorhanden sein, durch die das Thermometer 1 für ein Halten am Deckel hindurchgesteckt werden kann. Die Öffnungen 38 sind dann eine Halteeinrichtung des Deckels 27 oder zumindest Teil einer Halteeinrichtung des Deckels 27. Ist der Deckel 27 geschlossen worden, dann kann das im Behälter 18 befindliche Thermometer 1 durch die Öffnungen 38 gehalten werden.

Ein oder mehrere der Öffnungen 38 können so dimensioniert sein, dass ein Griff 7 des Thermometers 1 nicht hindurchgesteckt werden kann.

In der Figur 26 wird eine weitere Ausführungsform eines Behälters 18 im Schnitt gezeigt. Von dem Deckel 27 kann eine Wand 39 nach unten abstehen. Die Wand 39 kann eine Öffnung 40 als Einschub umfassen. Die Öffnung 40 kann quadratisch oder wie gezeigt näherungsweise quadratisch sein. Der Durchmesser der Öffnung 40 kann so sein, dass eine Hülle 20 des Thermometers 1 mit deutlichem Spiel durch die Öffnung 40 hindurchgesteckt werden kann. Die Hülle 20 kann wie gezeigt einen kreisrunden Durchmesser aufweisen.

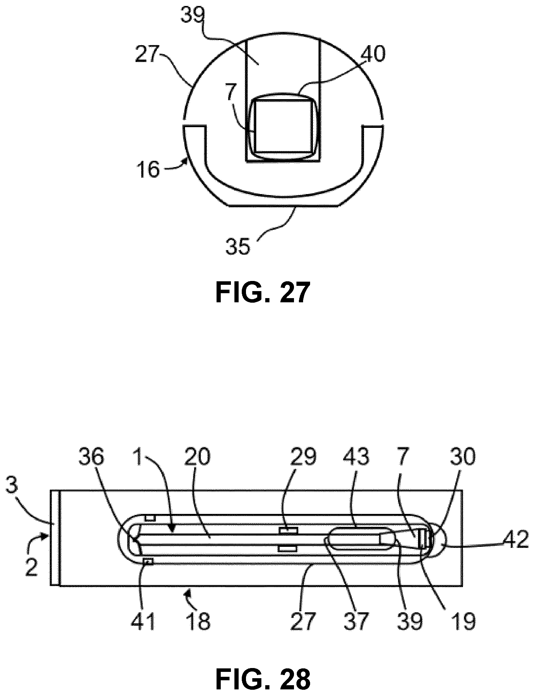

Die Öffnung 40 kann so dimensioniert sein, dass ein Griff 7 des Thermometers 1 in die Öffnung 40 eingeschoben werden kann. Die Öffnung 40 kann so dimensioniert sein, dass der Griff 7 des Thermometers 1 ohne Spiel in der Öffnung 40 gehalten wird, wenn das Thermometer 1 maximal weit durch die Öffnung 40 hindurchgeschoben worden ist. Der Griff 7 kann zunächst einen kreisrunden Durchmesser wie die Hülle 20 aufweisen. Der kreisrunde Durchmesser kann in einen quadratischen Durchmesser oder einen näherungsweise quadratischen Durchmesser übergehen. Es kann so erreicht werden, dass das Thermometer um seine Längsachse bei Bedarf zwangsläufig gedreht und auf diese Weise ausgerichtet wird, wenn der Griff 7 in die Öffnung 40 maximal weit hineingeschoben wird. Die Öffnung 40 kann dann eine Halteeinrichtung des Deckels 27 bilden. Ist der Deckel 27 geschlossen und befindet sich das Thermometer 1 dann im Behälter 18, dann kann sich der Griff 7 innerhalb der Öffnung 40 befinden. Eine Feder 30, wie diese in der Figur 22 gezeigt wird, kann dann den Griff 7 maximal weit in die Öffnung 40 hineingedrückt haben. Der Griff 7 kann dann ohne Spiel gehalten sein, wie dies in der Figur 27 gezeigt wird.

Es können zusätzlich zu der Wand 39 ein oder mehrere Wände 37 mit Öffnungen 38 aus der Figur 25 vorhanden sein, durch die das Thermometer 1 für ein Halten am Deckel hindurchgesteckt werden kann. Die Öffnungen 38 und 40 bilden dann eine Halteeinrichtung des Deckels 27 oder sind zumindest Teil einer Halteeinrichtung.

In der Figur 28 wird eine Aufsicht auf eine Ausführungsform eines Behälters 18 gezeigt. Der Deckel 27 des Behälters 18 kann aus einem transparenten Material bestehen. Dann kann ein im Behälter 18 befindliches Thermometer 1 durch den Deckel 27 hindurch sichtbar sein. Es können zwei Lagerstellen 41 nahe bei einem ersten stirnseitigen Ende des langgestreckten Deckels 16 vorhanden sein, durch die der Deckel 27 schwenkbar gelagert wird. Die Lagerstellen 41 können im Innenraum oder angrenzend an den Innenraum des Behälters 18 angeordnet sein. Es kann eine Griffmulde 42 an einem gegenüberliegenden zweiten, stirnseitigen Ende des langgestreckten Deckels 16 vorhanden sein. Die Griffmulde 42 ermöglicht es, mit einem Finger den Deckel 16 erfassen und anheben zu können.

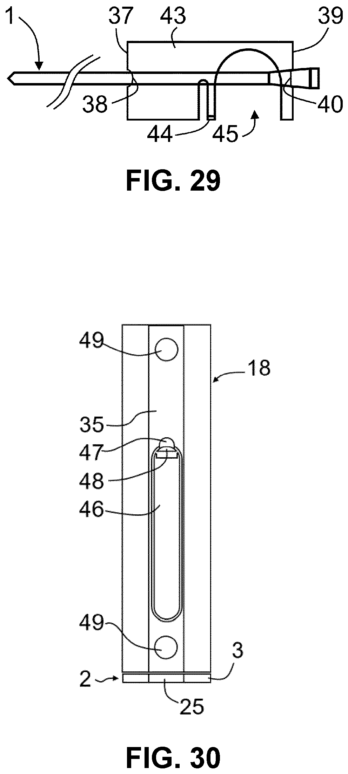

Die beiden Wände 37 und 39 können Stirnwände eines Ovals sein. Die beiden Wände 37 und 39 können so mechanisch stabilisiert sein. In die beispielsweise geradlinig verlaufenden Seitenwände 43 des Ovals kann, wie dies in der Figur 29 in einer seitlichen Ansicht gezeigt wird, eine Lasche mit einem hakenförmigen Ende 44 eingeschnitten sein. Das hakenförmigen Ende 44 kann in eine dafür vorgesehene Rastausnehmung bei einer Seitenwand des Innenraums des Behälters 18 einrasten, um den Deckel 27 in einer geschlossenen Stellung halten zu können. Durch Anheben des Deckels 27 mit hinreichend großer Kraft kann das hakenförmige Ende 44 wieder gelöst werden. Hakenförmiges Ende meint, dass von der Lasche seitlich etwas absteht, was in eine Rastausnehmung einrasten kann. Anstelle eines hakenförmigen Endes 44 kann auch ein anders geformtes Rastelement, so zum Beispiel eine Rastausnehmung, vorgesehen sein, welches mit einem dazu korrespondierenden Rastelement bei einer Seitenwand des Innenraums des Behälters 18 lösbar verrasten kann.

Beispielsweise angrenzend an die Lasche mit dem hakenförmigen Ende 44 kann eine Aussparung 45 in den Seitenwänden 43 des Ovals vorhanden sein. Die Aussparungen können so dimensioniert sein, dass ein gehaltenes Thermometer 1 mit einem Finger erreicht werden kann, beispielsweise für ein Drehen und Ausrichten des Thermometers 1. Die Aussparungen können gegenüberliegend angeordnet sein.

Im Grund des Behälters 18 kann eine ovale Ausnehmung vorhanden sein, in die das Oval mit den Wänden 37, 39, 43 mit geringem Spiel hineinreichen kann, wenn der Deckel 27 geschlossen ist. Die ovale Ausnehmung kann zur Stabilisierung und Ausrichtung beitragen.

In der Figur 30 wird der Behälter 18 mit einer Sicht auf die ebene Unterseite 35 gezeigt, und zwar im senkrecht aufgestellten Zustand des Behälters 18. Der Behälter 18 ist auf dem Fuß 3 der Thermometerhalterung abgestellt. Das Material, aus dem der Behälter 18 besteht, kann steif sein im Vergleich zum Material, aus dem der Fuß 3 besteht. Der Fuß 3 kann beispielsweise aus einem Elastomer bestehen, damit der Behälter 18 geräuschgedämmt senkrecht aufgestellt werden kann. Das Material des Behälters 18 ist dann weniger nachgiebig und kann dann beispielsweise ein Hartkunststoffmaterial sein. Das Material des Fußes 3 kann für Rutschfestigkeit sorgen und auch deshalb beispielsweise aus einem Elastomer bestehen.

Der Behälter 18 kann beispielsweise an seiner Unterseite 35 ein Batteriefach mit Deckel 46 aufweisen, um in das Batteriefach beispielsweise eine handelsübliche Batterie einsetzen zu können. Die Batterie kann eine AAA oder AA Batterie sein. Die Batterie kann für ein Aufladen des Thermometers 1 genutzt werden. An eine Stirnseite des Batteriefach-Deckels 46 kann eine Griffmulde 47 angrenzen, um den Batteriefach-Deckel 46 anheben zu können. An der Stirnseite kann der Batteriefach-Deckel 46 ein Rastelement 48 aufweisen, um den Batteriefach-Deckel 46 befestigen zu können. Beispielsweise dank der Griffmulde 47 kann das Rastelement 48 für ein Öffnen zurückgedrückt werden.

Der Behälter 18 kann beispielsweise an seiner Unterseite ein oder mehrere Magnete 49 aufweisen, um den Behälter 18 magnetisch an einer Wand befestigen zu können.

## Patentansprüche

1. System mit einem Thermometer (1), einem Akku (21) im Thermometer (1), einem Behälter (18) für das Thermometer (1) und einem Deckel (27) für das Verschließen des Behälters (18), wobei der Behälter (18) eine Ladeeinrichtung (29, 30) für das Laden des Akkus (21) umfasst, **dadurch gekennzeichnet, dass** der Deckel (27) eine Halteeinrichtung für das Halten des Thermometers (1) umfasst und durch das Verschließen des Behälters mittels des Deckels (27) das Thermometer (1) mit der Ladeeinrichtung (29, 30) für ein Aufladen des Akkus (21) verbunden wird, wenn das Thermometer (1) durch den Deckel (27) gehalten wird.

2. System nach dem vorhergehenden Anspruch, **dadurch gekennzeichnet, dass** die Ladeeinrichtung als Ladekontakt eine Rasteinrichtung (29) umfasst, in die das Thermometer (1) einrastet, wenn das Thermometer (1) im Behälter (18) geladen wird.

3. System nach dem vorhergehenden Anspruch, **dadurch gekennzeichnet, dass** die Rasteinrichtung eine Klammer (29) als Ladekontakt umfasst.

4. System nach einem der vorhergehenden Ansprüche, **dadurch gekennzeichnet, dass** die Ladeeinrichtung als Ladekontakt eine Feder (30) umfasst.

5. System nach dem vorhergehenden Anspruch, **dadurch gekennzeichnet, dass** die Feder (30) an einer Stirnseite des Thermometers (1) anliegt, wenn das Thermometer (1) im Behälter (18) geladen wird.

6. System nach einem der vorhergehenden Ansprüche, **dadurch gekennzeichnet, dass** das Thermometer (1) stiftförmig ist und eine aus Metall bestehende Hülle (20) umfasst, die durch ein Griffteil (7) von einem aus Metall bestehenden Endstück (19) elektrisch von der der Hülle (20) getrennt ist, wobei die Hülle (20) und das Endstück (19) Ladekontakte für ein Aufladen des Akkus (21) des Thermometers (1) sind.

7. System nach einem der vorhergehenden Ansprüche, **dadurch gekennzeichnet, dass** die Halteeinrichtung des Deckels (27) einen Einschub (28) umfasst, in den das Thermometer (1) für ein Halten des Thermometers (1) hineingeschoben werden kann.

8. System nach dem vorhergehenden Anspruch, **dadurch gekennzeichnet, dass** der Einschub (28) so ausgerichtet ist, dass das Thermometer (1) parallel zum Deckel (27) in den Einschub (28) hineingeschoben werden kann.

9. System nach einem der vorhergehenden Ansprüche, **dadurch gekennzeichnet, dass** das Thermometer (1) eine Spitze (6) umfasst und der Behälter (18) eine an die Spitze angepasste Ausnehmung umfasst, in die das Thermometer (1) hineinreicht, wenn das Thermometer (1) im Behälter (18) ist.

10. System nach einem der vorhergehenden Ansprüche, **dadurch gekennzeichnet, dass** der Deckel (27) schwenkbar mit dem Behälter (18) verbunden ist.

11. System nach einem der vorhergehenden Ansprüche, **dadurch gekennzeichnet, dass** die Länge des Deckels (27) der Länge des Thermometers (1) entspricht.

12. System nach einem der vorhergehenden Ansprüche, **dadurch gekennzeichnet, dass** der Behälter (18) eine ebene Unterseite (35) aufweist, die dem Deckel (27) gegenüberliegt.

13. System nach einem der vorhergehenden Ansprüche, **dadurch gekennzeichnet, dass** das System eine aus einem Elastomer oder einem anderem Kunststoff bestehende Thermometerhalterung (2) für ein Halten des Thermometers (1) umfasst und die Thermometerhalterung (2) durch den Behälter (18) gehalten werden kann.

14. System nach dem vorhergehenden Anspruch, **dadurch gekennzeichnet, dass** der Behälter (18) an einer Stirnseite eine Ausnehmung (32) umfasst, in die die Thermometerhalterung (2) eingesetzt werden kann, wobei in der Stirnseite eine Platte (34) vorhanden ist, die sich in einem Schlitz (12) der Thermometerhalterung (2) befinden kann, wenn die Thermometerhalterung (2) in die Ausnehmung (32) eingesetzt ist.

15. Verwendung einer Thermometerhalterung (2) für ein Aufstellen eines Systems nach einem der vorhergehenden Ansprüche, indem die Thermometerhalterung (2) mit dem Behälter (18) verbunden wird und der Behälter 18 auf der Thermometerhalterung (2) abgestellt wird, wobei die Thermometerhalterung (2) eine Thermometerhalteeinrichtung (8) für ein Halten des Thermometers (1) umfasst.

## Claims

1. System having a thermometer (1), a rechargeable battery (21) in the thermometer (1), a container (18) for the thermometer (1), and a lid (27) for closing the container (18), wherein the container (18) comprises a charging device (29, 30) for charging the rechargeable battery (21), **characterized in that** the lid (27) comprises a holding device for holding the thermometer (1) and, by closing the container using the lid (27), the thermometer (1) is connected to the charging device (29, 30) for charging the rechargeable battery (21) when the thermometer (1) is held by the lid (27).

2. System according to the preceding claim, **characterized in that** the charging device comprises a latching device (29) as a charging contact, into which the thermometer (1) latches when the thermometer (1) is charged in the container (18).

3. System according to the preceding claim, **characterized in that** the latching device comprises a clip (29) as a charging contact.

4. System according to one of the preceding claims, **characterized in that** the charging device comprises a spring (30) as charging contact.

5. System according to the preceding claim, **characterized in that** the spring (30) rests against an end face of the thermometer (1) when the thermometer (1) is charged in the container (18).

6. System according to one of the preceding claims, **characterized in that** the thermometer (1) is pin-shaped and comprises a casing (20) consisting of metal, which is electrically separated from an end piece (19) consisting of metal from the casing (20) by a handle part (7), wherein the casing (20) and the end piece (19) are charging contacts for charging the rechargeable battery (21) of the thermometer (1).

7. System according to one of the preceding claims, **characterized in that** the holding device of the lid (27) comprises a slot (28) into which the thermometer (1) can be pushed for holding the thermometer (1).

8. System according to the preceding claim, **characterized in that** the slot (28) is aligned such that the thermometer (1) can be pushed into the slot (28) parallel to the lid (27).

9. System according to one of the preceding claims, **characterized in that** the thermometer (1) comprises a tip (6) and the container (18) comprises a recess adapted to the tip into which the thermometer (1) extends when the thermometer (1) is in the container (18).

10. System according to one of the preceding claims, **characterized in that** the lid (27) is pivotably connected to the container (18).

11. System according to one of the preceding claims, **characterized in that** the length of the lid (27) corresponds to the length of the thermometer (1).

12. System according to one of the preceding claims, **characterized in that** the container (18) has a flat underside (35) which is opposite the lid (27).

13. System according to one of the preceding claims, **characterized in that** the system comprises a thermometer holder (2) consisting of an elastomer or other plastic for holding the thermometer (1) and the thermometer holder (2) can be held by the container (18).

14. System according to the preceding claim, **characterized in that** the container (18) comprises a recess (32) at an end face, into which the thermometer holder (2) can be inserted, wherein a plate (34) is present in the end face, which can be located in a slit (12) of the thermometer holder (2) when the thermometer holder (2) is inserted into the recess (32).

15. Use of a thermometer holder (2) for setting up a system according to one of the preceding claims, in which the thermometer holder (2) is connected to the container (18) and the container (18) is placed on the thermometer holder (2), wherein the thermometer holder (2) comprises a thermometer holding device (8) for holding the thermometer (1).

## Revendications

1. Système avec un thermomètre (1), un accumulateur (21) dans le thermomètre (1), un récipient (18) pour le thermomètre (1) et un couvercle (27) pour la fermeture du récipient (18), dans lequel le récipient (18) comprend un dispositif de chargement (29, 30) pour le chargement de l'accumulateur (21), **caractérisé en ce que** le couvercle (27) comprend un dispositif de maintien pour maintenir le thermomètre (1) et par la fermeture du récipient au moyen du couvercle (27) le thermomètre (1) sera relié au dispositif de maintien (29, 30) pour un chargement de l'accumulateur (21) lorsque le thermomètre (1) est maintenu par le couvercle (27).

2. Système selon la revendication précédente, **caractérisé en ce que** le dispositif de chargement comprend, comme contact de chargement, un dispositif d'encliquetage (29) dans lequel le thermomètre (1) s'enclenche lorsque le thermomètre (1) sera chargé dans le récipient (18).

3. Système selon la revendication précédente, **caractérisé en ce que** le dispositif d'encliquetage comprend une pince (29) comme contact de chargement.

4. Système selon l'une des revendications précédentes, **caractérisé en ce que** le dispositif de chargement comprend un ressort (30) comme contact de chargement.

5. Système selon la revendication précédente, **caractérisé en ce que** le ressort (30) est en appui contre une face frontale du thermomètre (1) lorsque le thermomètre (1) sera chargé dans le récipient (18).

6. Système selon l'une des revendications précédentes, **caractérisé en ce que** le thermomètre (1) est en forme de stylo et comprend une enveloppe constituée de métal (20) qui est séparée électriquement de l'enveloppe (20) par une partie de préhension (7) d'une pièce d'extrémité constituée de métal (19), dans lequel l'enveloppe (20) et la pièce d'extrémité (19) sont des contacts de chargement pour un chargement de l'accumulateur (21) du thermomètre (1).

7. Système selon l'une des revendications précédentes, **caractérisé en ce que** le dispositif de maintien du couvercle (27) comprend un élément d'insertion (28) dans lequel le thermomètre (1) peut être poussé pour un maintien du thermomètre (1).

8. Système selon la revendication précédente, **caractérisé en ce que** l'élément d'insertion (28) est orienté de manière à ce que le thermomètre (1) peut être poussé dans l'intérieur de l'élément d'insertion (28) parallèlement au couvercle (27).

9. Système selon l'une des revendications précédentes, **caractérisé en ce que** le thermomètre (1) comprend une pointe (6) et le récipient (18) comprend un évidement adapté à la pointe dans lequel le thermomètre (1) s'étend lorsque le thermomètre (1) est dans le récipient (18).

10. Système selon l'une des revendications précédentes, **caractérisé en ce que** le couvercle (27) est relié de manière pivotante au récipient (18).

11. Système selon l'une des revendications précédentes, **caractérisé en ce que** la longueur du couvercle (27) correspond à la longueur du thermomètre (1).

12. Système selon l'une des revendications précédentes, **caractérisé en ce que** le récipient (18) présente une sous-face plane (35) qui est située en face du couvercle (27).

13. Système selon l'une des revendications précédentes, **caractérisé en ce que** le système comprend un support de thermomètre (2) constitué d'un élastomère ou d'une autre matière plastique pour un maintien du thermomètre (1) et le support de thermomètre (2) peut être maintenu par le récipient (18).

14. Système selon la revendication précédente, **caractérisé en ce que** le récipient (18) comprend, à une face frontale, un évidement (32) dans lequel le support de thermomètre (2) peut être inséré, dans lequel une plaque (34) est présente dans la face frontale qui peut se trouver dans une fente (12) du support de thermomètre (2) lorsque le support de thermomètre (2) est inséré dans l'évidement (32).

15. Utilisation d'un support de thermomètre (2) pour une mise en place d'un système selon l'une des revendications précédentes, en reliant le support de thermomètre (2) au récipient (18) et en plaçant le récipient (18) sur le support de thermomètre (2), dans lequel le support de thermomètre (2) comprend un dispositif de maintien de thermomètre (8) pour maintenir le thermomètre (1).
